# EUROPÄISCHE PATENTSCHRIFT

(11) **EP 3 892 230 B1**
(45) Veröffentlichungstag und Bekanntmachung des Hinweises auf die Patenterteilung: **07.06.2023**
(21) Anmeldenummer: 21176986.4
(22) Anmeldetag: 11.08.2017
(51) Int. Cl.: A61C 8/00

(54) **IMPLANTATSCHRAUBE FÜR EIN DENTALIMPLANTAT**
IMPLANT SCREW FOR A DENTAL IMPLANT
VIS POUR IMPLANT DENTAIRE

(30) Priorität: 12.08.2016 CH 10402016
(43) Veröffentlichungstag der Anmeldung: 13.10.2021
(62) Teilanmeldung aus: 17755258.5
(73) Patentinhaber: maxon international ag, 6072 Sachseln (CH)
(72) Erfinder: Samsfort, Peter, 79346 Endingen (DE); Zimmermann, Dirk, 79350 Sexau (DE)
(74) Vertreter: IPrime Rentsch Kaelin AG

(56) Entgegenhaltungen:
- US-A1- 2009 029 318

## Beschreibung

Die vorliegende Erfindung liegt auf dem Gebiet der Implantate, insbesondere der Dentalimplantate. Sie betrifft eine Implantatschraube für ein Dentalimplantat.

### Technologischer Hintergrund

Dentalimplantate können einteilig und mehrteilig ausgestaltet sein. Heutzutage haben sich die mehrteiligen gegenüber den einteiligen Dentalimplantaten durchgesetzt, da mehrteilige Dentalimplantate bessere Anpassungsfähigkeit und Schutz vor unerwünschten Belastungen während des Einheilungsprozesses bieten als einteilige Dentalimplantate.

Eine grosse Anzahl von aus dem Stand der Technik bekannten mehrteiligen Dentalimplantaten ist dreiteilig aufgebaut und umfasst somit einen in einen Kieferknochen einzusetzenden Basiskörper, ein am Basiskörper zu befestigendes Abutment und eine auf das Abutment aufzusetzende Suprakonstruktion. Der auch als Implantatkörper bekannte Basiskörper soll die Zahnwurzel ersetzen und ist meistens zylindrisch oder konisch geformt. In der Regel weist der Basiskörper ein Gewinde auf, über welches der Basiskörper durch Einschrauben im Kieferknochen befestigt werden kann und dadurch eine primäre Festigkeit im Kieferknochen erreicht. Während Basiskörper und Abutment in den Kiefer eingebettet bzw. von der Suprakonstruktion abgedeckt sind, liegt letztere im Mundraum frei und stellt den eigentlichen Zahnaufbau dar. Das auch als Implantataufbau bekannte Abutment dient gewissermassen als Zwischenglied zwischen Basiskörper und Suprakonstruktion und wird in den Basiskörper üblicherweise eingeschraubt und/oder eingeklebt.

Der Basiskörper sollte aus einem möglichst bioinerten Material gefertigt sein, um für den Patienten weitgehend verträglich und komplikationsfrei eingesetzt werden zu können und eine Rückbildung des Zahnfleisches zu unterbinden. Sowohl Material als auch Struktur des Basiskörpers sollen einen hohen Osseointegrationsgrad ermöglichen. Diese Anforderungen an die so genannte Biokompatibilität sowie an eine hohe Periointegration gelten auch für das Abutment und die Suprakonstruktion. Als Material mit vorteilhaften Verarbeitungseigenschaften sowie hoher Biokompatibilität hat sich mehrheitlich Keramik, insbesondere Zirkoniumoxid, durchgesetzt. Als Alternative zur Keramik wird oft Titan eingesetzt, das jedoch keine so gute Biokompatibilität und Periointegration wie Keramik aufweist.

Für den Langzeiterfolg einer Implantation ist eine verlässliche und gegen Knochen sowie Zahnfleisch abgedichtete Verbindung von Abutment und Basiskörper entscheidend. Eine mangelhafte Verbindung zwischen Abutment und Basiskörper kann zur Lockerung des Dentalimplantats und zur Beschädigung des Dentalimplantats führen. Undichte Verbindungen können das Eindringen von Bakterien in das Implantat zulassen, die zu Periimplantitis führen und somit u.a. Kieferknochenschwund herbeiführen können. Weiter stellen im Gebiss auftretende Kräfte für einen Langzeiterfolg von Implantaten hohe Anforderungen an deren Material und Konstruktion. So müssen die Implantate sämtliche im Gebiss auftretenden Kräfte aufnehmen können, ohne zu brechen, einzureissen oder sich zu lockern. Daher ist es sowohl beim Einsetzen als auch über die gesamte Lebensdauer des Dentalimplantates wesentlich, wo und wie genau eine Krafteinleitung in die einzelnen Komponenten des Implantates stattfindet.

Je nach Position des einzusetzenden Dentalimplantats im Kiefer und Knochenangebot an der Position können verschiedene Implantattypen sowie insbesondere verschiedene Längen bzw. Grössen der Dentalimplantate erforderlich sein. Aufgrund der je nach Kiefersituation variierenden geeigneten Grösse des Dentalimplantats kommen in der Regel Serien mit Bestandteilen verschiedener Grössen zum Einsatz, welche für einen hohen Langzeiterfolg wie eingangs genannt eine verlässliche Verbindung zwischen Abutment und Basiskörper bereitstellen sollten. So können die Serien beispielsweise mehrere Basiskörper verschiedener Grösse beinhalten, zum Beispiel mit Längen von 6, 8, 10, 12, 14 oder 16 mm bei unterschiedlichen Durchmessern von beispielsweise 3.3, 4.1 oder 4.8 mm sowie verschiedenartige Abutments, die geradlinig oder abgewinkelt ausgestaltet sind und ebenfalls in verschiedenen Grössen vorliegen können.

Zusammenfassend haben Dentalimplantate hohen Anforderungen an Biokompabilität, Dichtigkeit, Krafteinleitung und Systemflexibilität zu genügen.

Beispielsweise beschreibt die von der Anmelderin eingereicht europäische Patentanmeldung mit der Veröffentlichungsnummer EP 2 735 279 A1, ein Dentalimplantat mit einem in einem Kieferknochen verankerbaren Basiskörper aus Keramik und einem mittels einer Schraube am Basiskörper befestigbaren Implantataufbau, wobei in einem zusammengesetzten Zustand des Dentalimplantats ein Gewindeabschnitt der Schraube in ein in einem Sackloch des Basiskörpers ausgebildetes Innengewinde eingreift. Die Schraube drückt den Implantataufbau gegen den Basiskörper. Ein formschlüssiger Eingriff zwischen dem Gewindeabschnitt der Schraube und dem Innengewinde des Loches besteht ausschliesslich in einer dem Implantataufbau abgewandten, unteren Hälfte des Basiskörpers, die sich über die Hälfte der Länge des Basiskörpers erstreckt.

Damit soll gemäss der EP 2 735 279 A1 erreicht werden, dass mechanische Spannungen homogen über eine gesamte Länge des Basiskörpers verteilt werden. Das Innengewinde, in das die Spannungen direkt über die Schraube eingeleitet werden, ist relativ weit vom Kontaktbereich zwischen Basiskörper und Implantataufbau entfernt tief im Fuss des Basiskörpers angeordnet. Um eine verlässliche Befestigung des Basiskörpers mit dem Implantataufbau mittels der Schraube zu erreichen, muss die Länge der Schraube mit der Länge des Sacklochs des Basiskörpers sowie eines Teils des Implantataufbaus übereinstimmen. Für verschieden lange Dentalimplantate sind dementsprechend jeweils unterschiedliche Schrauben vorzusehen. Die Bereitstellung unterschiedlicher Schrauben ist nicht nur kostspielig, sondern darüber hinaus auch in der Anwendung mühsam, führt also zu unerwünschten Mehrkosten und Aufwänden.

US 2009/029318 A1 offenbart eine Implantatschraube mit einem keramischen Kopfteil.

### Darstellung der Erfindung

Es ist daher eine Aufgabe der Erfindung, Dentalimplantate bereitzustellen, die den allgemeinen Anforderungen für eine erfolgreiche Implantation sowie Verwendung genügen und sich zumindest einfacher an Knochenvariationen und Implantatangebot anpassen lassen als aus dem Stand der Technik bekannte Dentalimplantate.

Diese Aufgabe wird erfindungsgemäss durch eine Implantatschraube gemäss unabhängigem Anspruch 1 gelöst. Bevorzugte Ausgestaltungen der Erfindung sind in den abhängigen Ansprüchen und in der vorliegenden Offenbarung angegeben.

Insbesondere wird die Aufgabe durch eine Implantatschraube für ein Dentalimplantat, mit einem keramischen Kopfteil und mit einem in einen Basiskörper des Dentalimplantats einschraubbaren nicht-keramischen Basisgewinde, gelöst.

Die erfindungsgemässe Lösung hat gegenüber dem Stand der Technik den Vorteil, dass Kopfteil und Basisgewinde an den jeweiligen Basiskörper angepasst ausgewählt werden können. Beispielsweise insbesondere können eine Vielzahl verschiedener Kopfteile durch die Verwendung des Basisgewindes auf den Basiskörper aufgeschraubt werden. Dabei kann das Basisgewinde ebenfalls an die jeweiligen Gegebenheiten angepasst sein oder es kann ein an die Gegebenheiten anpassbarer Verbinder bzw. Einheitsverbinder verwendet werden, an dem das Basisgewinde ausgeformt ist.

Der Kopfteil besteht aus Keramik, um eine möglichst hohe Biokompatibilität einer erfindungsgemässen Implantatschraube zu gewährleisten. Der Kopfteil kann unverlierbar mit einer Prothetik verbunden oder an einer Prothetik bzw. als Prothetik ausgeformt sein. Beispielsweise ist der Kopfteil bzw. die Prothetik rotationssymmetrisch ausgestaltet. An Kopfteil bzw. Prothetik kann eine Kontaktfläche ausgeformt sein, die dazu ausgebildet ist, bündig auf dem Basiskörper aufzuliegen. Somit kann das Basisgewinde zwischen Kopfteil bzw. Prothetik und Basiskörper eingeschlossen aufgenommen sein. Das Basisgewinde besteht aus einem nicht-keramischen Werkstoff. Als nicht keramischer Werkstoff kann vorzugsweise ein Metall oder eine Metalllegierung verwendet werden, um einer erfindungsgemässen Implantatschraube eine möglichst hohe Zähigkeit zu verleihen. Somit hilft die Erfindung als Verbindungssystem eine Art Systembaukasten für Zahnaufbauten und andere Bestandteile von Dentalimplantaten bereitzustellen, die von der Einheilphase des Implantats bis zu seinem gebrauchsfertigen Aufbau Verwendung finden. So kann es sich bei der Prothetik beispielsweise um einen Gingivaformer zur Anpassung des Zahnfleisches an eine Form einer später verwendeten Abutments handeln. Alternativ oder zusätzlich können Prothetik und Verbinder gemeinsam als Implantatschraube in Form einer Einheilschraube zur Abdichtung des Basiskörpers bzw. Implantates gegen Bakterien während der Einheilung dienen.

Erfindungsgemässe Einheitsverbinder bzw. Verbinder können folglich zusammen mit erfindungsgemässen Abutments und/oder Prothetiken verwendet werden. Die Abutments und/oder Prothetiken können als Kopf bzw. Kopfteil von zusammen mit dem Verbinder bzw. Einheitsverbinder gebildeten Schrauben verwendet werden bzw. zumindest abschnittsweise einen Kopf oder Kopfteil einer Schraube bilden, beispielsweise einer Implantat- oder Einheilschraube. Mit anderen Worten können Abutment, Prothetik und/oder Kopfteil äquivalent mit einem erfindungsgemässen Verbinder bzw. Einheitsverbinder zusammenwirken und dementsprechend dazu erforderliche Ausgestaltungsformen und Merkmale aufweisen, wie sie hierin unter Bezug auf Abutment, Prothetik und/oder Kopfteil beschrieben sind.

Die erfindungsgemässe Lösung kann durch die folgenden weiteren, jeweils für sich vorteilhaften Ausführungsformen beliebig ergänzt und weiter verbessert werden, wobei ein Fachmann ohne Weiteres klar und eindeutig erkennen wird, dass Vorrichtungsmerkmale von Komponenten eines erfindungsgemässen Verbindungssystems entsprechende Schritte erfindungsgemässer Verfahren zur Herstellung und zum Einsatz eines erfindungsgemässen Verbindungssystems und seiner Komponenten begründen und umgekehrt.

So ist gemäss einer ersten weiteren Ausführungsform vorgesehen, dass der Kopfteil über einen Formschluss zur Übertragung eines um eine Mittelachse der Implantatschraube wirkenden Drehmoments mit dem Basisgewinde verbunden ist. Der Formschluss hilft, Relativdrehungen zwischen Kopfteil und Basisgewinde zumindest um die Mittelachse herum zu verhindern. Durch den Formschluss können Drehmomente präzise und sicher vom Kopfteil auf das Basisgewinde übertragen werden und umgekehrt. Durch den Formschluss können erfindungsgemässe zweiteilige Implantatschrauben aus Kopfteil und Basisgewinde gehandhabt werden, wie es bei einteiligen Implantatschrauben möglich ist.

Gemäss einer weiteren Ausführungsform ist vorgesehen, dass der Kopfteil mit einer Ausnehmung versehen ist, in der wenigstens abschnittsweise ein Verbinder aufgenommen ist, an dem das Basisgewinde ausgeformt ist. Die Ausnehmung ist beispielsweise sacklochartig ausgestaltet. Die Ausgestaltung der Ausnehmung als Sackloch hilft, den Verbinder bzw. ein oberes Ende des Verbinders vorzugsweise mit der Ausnehmung zu umschliessen. Zum einen lässt sich somit eine möglichst innige und feste Verbindung zwischen Kopfteil und Verbinder herstellen. Zum anderen ist eine zumindest abschnittsweise Einbettung des nicht-keramischen Verbinders in das keramische Material des Kopfteils begünstigt. Der Verbinder kann den jeweiligen Anforderungen entsprechend ausgestaltet bzw. ausgewählt sein. Beispielsweise ist der Verbinder bolzenförmig und/oder zumindest abschnittsweise zylindrisch ausgeformt. Das Basisgewinde kann dementsprechend die Form eines Gewindebolzens aufweisen.

Gemäss einer weiteren Ausführungsform ist vorgesehen, dass in der Ausnehmung ein Gegenhaltegewinde zum Aufschrauben des Kopfteils auf den Verbinder angeordnet ist. Das Gegenhaltegewinde ermöglicht, den Verbinder in den Kopfteil einzuschrauben, um somit eine formschlüssige Verbindung zwischen Kopfteil und Verbinder herzustellen. Kopfteil und Verbinder können daher einfach miteinander kombiniert werden.

Gemäss einer weiteren Ausführungsform ist vorgesehen, dass dem Gegenhaltegewinde eine mit dem Kopfteil verbundene Verzahnung zugeordnet ist. Beispielsweise ist die Verzahnung an der Prothetik bzw. dem Kopfteil ausgeformt. Die Verzahnung kann beispielsweise beim Zusammenführen des Kopfteils bzw. der Prothetik mit dem Verbinder in dessen Material eindringen und eine form- und/oder kraftschlüssige Verbindung zwischen Kopfteil bzw. Prothetik und Verbinder herbeiführen helfen.

Gemäss einer weiteren Ausführungsform ist vorgesehen, dass die Verzahnung das Gegenhaltegewinde umkränzt. Mit anderen Worten umgibt die Verzahnung kranzförmig das Gegenhaltegewinde und/oder überlappt sich mit diesem. Beispielsweise kann die Verzahnung eine Öffnung zur Ausnehmung bzw. dem darin angeordneten Gegenhaltegewinde umgeben. Dies begünstigt einen möglichst symmetrischen und daher ausgeglichenen Eingriff der Verzahnung in das Material des Verbinders.

Gemäss einer weiteren Ausführungsform ist vorgesehen, dass die Verzahnung flache Zahnflanken und/oder steile Zahnflanken aufweist, wobei die flachen Zahnflanken in eine Schraubrichtung des Gegenhaltegewindes Weisen bzw. die steilen Zahnflanken entgegen der Schraubrichtung weisen. Bei der Schraubrichtung handelt es sich beispielsweise um diejenige Richtung, in der das Gegenhaltegewinde und folglich das Kopfteil bzw. die Prothetik auf den Verbinder aufschraubbar ausgestaltet ist. Indem die flachen Zahnflanken in Richtung der Schraubrichtung weisen, begünstigen sie selbst nach ihrem Kontakt mit dem Verbinder ein weiteres Aufschrauben des Kopfteils bzw. der Prothetik auf den Verbinder, da sie über das Material des Verbinders gleiten. Hingegen bewirken die steilen Zahnflanken, dass die Verzahnung sich beim Bewegen des Kopfteils bzw. der Prothetik relativ zum Verbinder entgegen der Schraubrichtung in das Material des Verbinders graben bzw. dieses derart verdrängen, dass ein inniger Form- und/oder Kraftschluss zwischen Kopfteil bzw. Prothetik und Verbinder bewirkt ist. Ein derartiger Form- und/oder Kraftschluss verhindert insbesondere ein ungewolltes Lösen der Schraubverbindung zwischen Kopfteil bzw. Prothetik und Verbinder.

Gemäss einer weiteren Ausführungsform ist vorgesehen, dass eine mit dem Kopfteil verbundene Stirnseite in Richtung zum Basisgewinde hin weist und/oder wenigstens abschnittsweise am Verbinder anliegt. Beispielsweise kann die Stirnseite an Kopfteil bzw. Prothetik ausgeformt sein und weist vorzugsweise in axialer Richtung, d. h. in eine im Wesentlichen parallel zur Mittelachse verlaufende Richtung. Eine derartige Stirnseite begünstigt eine Kraft- und/oder Momentenübertragung zwischen Kopfteil bzw. Prothetik und Verbinder einerseits sowie zwischen Implantatschraube und Basiskörper andererseits.

Gemäss einer weiteren Ausführungsform ist vorgesehen, dass die Stirnseite ringförmig ausgebildet ist. Die Stirnseite kann beispielsweise eine Öffnung zur Ausnehmung bzw. dem Basisgewinde umschliessen bzw. einen Rand der Öffnung ausbilden. Eine ringförmige ausgestaltete, vorzugsweise rotationssymmetrisch zur Mittelachse angeordnete Stirnseite begünstigt eine möglichst gleichmässige Kraft- und/oder Momentenübertragung zwischen Kopfteil bzw. Prothetik und Verbinder einerseits sowie zwischen Implantatschraube und Basiskörper andererseits.

Gemäss einer weiteren Ausführungsform ist vorgesehen, dass wenigstens ein Zahn an der Stirnseite ausgeformt ist, an dem eine von der Stirnseite weg weisende Zahnspitze ausgeformt ist. Beispielsweise kann die Verzahnung aus einer Vielzahl derartiger Zähne gebildet sein. Die Zahnspitzen können von der Stirnseite hervorragen und somit in das Material des Verbinders eindringen, um eine möglichst innige kraft- und/oder formschlüssige zwischen Kopfteil bzw. Prothetik und Verbinder zu bewirken.

Gemäss einer weiteren Ausführungsform ist vorgesehen, dass der wenigstens eine Zahn zumindest abschnittsweise die Verzahnung ausbildet. Mit anderen Worten umfasst die Verzahnung den von der Stirnseite weg weisenden Zahn. Der wenigstens eine Zahn kann entsprechend eine flache und eine steile Zahnflanke aufweisen, wie oben beschrieben ist. Vorteilhafterweise ist eine Vielzahl von die Verzahnung bildenden Zähnen rotationssymmetrisch zur Mittelachse entlang der Stirnseite angeordnet, um eine möglichst gleichmässige Kraftübertragung zwischen Kopfteil bzw. Prothetik und Verbinder zu gewährleisten.

Gemäss einer weiteren Ausführungsform ist vorgesehen, dass der Verbinder einem Halteabschnitt aufweist, an dem ein Haltegewinde zum Aufschrauben des Kopfteils auf den Verbinder ausgeformt ist. Das Haltegewinde ist vorzugsweise komplementär zum Gegenhaltegewinde ausgestaltet. Dies begünstigt, eine möglichst spielfreie zuverlässige Schraubverbindung zwischen Kopfteil bzw. Prothetik und Verbinder herzustellen.

Gemäss einer weiteren Ausführungsform ist vorgesehen, dass der Verbinder einen Ringbund aufweist, der zumindest abschnittsweise in Richtung zum Kopfteil hin weist. Am Ringbund kann der Kopfteil bzw. die Prothetik, insbesondere deren Stirnseite, zur Anlage kommen. Dies begünstigt zum einen eine innige Verbindung zwischen Kopfteil bzw. Prothetik und Verbinder. Zum anderen kann durch eine bündige Auflage des Kopfteils bzw. der Prothetik am Ringbund des Verbinders eine ordnungsgemässe Vereinigung von Kopfteilbeziehung Prothetik und Verbinder optisch und/oder haptisch einfach verifiziert werden.

Gemäss einer weiteren Ausführungsform ist vorgesehen, dass wenigstens ein Eingriffsmittel zum Ansetzen eines Werkzeugs zum Einschrauben des Verbinders am Ringbund ausgeformt ist. Beispielsweise kann eine Aussenkontur des Ringbundes als Eingriffsmittel ausgestaltet sein. Vorzugsweise ist die Aussenkontur als Aussensechskant ausgeformt. Das Eingriffsmittel des Verbinders vereinfacht es, möglichst materialschonend Kräfte und/oder Drehmomente über ein Werkzeug auf den Verbinder zu übertragen.

Gemäss einer weiteren Ausführungsform ist vorgesehen, dass wenigstens ein Eingriffsmittel zum Ansetzen eines Werkzeugs zum Einschrauben der Implantatschraube am Kopfteil ausgeformt ist. Beispielsweise kann eine Innenkontur des Eingriffsmittels des Kopfteils bzw. der Prothetik als Innensechskant oder Innensechsrund ausgeformt sein. Das Eingriffsmittel des Kopfteils bzw. der Prothetik vereinfacht es, möglichst materialschonend Kräfte und/oder Drehmomente über ein Werkzeug auf den Kopfteil bzw. die Prothetik einerseits und andererseits auf die Implantatschraube zu übertragen.

Gemäss einer weiteren Ausführungsform ist vorgesehen, dass der Kopfteil über eine Klebeverbindung mit dem Basisgewinde verbunden ist. Beispielsweise ist der Kopfteil bzw. die Prothetik mit dem Verbinder verklebt. Die Verklebung kann alternativ oder zusätzlich zu einer oben beschriebenen Schraubverbindung zwischen Kopfteil bzw. Prothetik und Verbinder eingesetzt werden, um diese innig miteinander zu verbinden. In Kombination mit einer Schraubverbindung kann die Verklebung wie eine Schraubensicherung wirken. Zwischen Kopfteil bzw. Prothetik und Verbinder kann eine Kavität ausgeformt sein, in die ein Kleber eindringen bzw. die vom Kleber aufgefüllt sein kann. Zur Bereitstellung der Kavität kann beispielsweise eine Ringnut am Basisgewinde bzw. in dessen Nähe vorzugsweise am Verbinder ausgeformt sein.

Ausserdem wird die Aufgabe durch einen Verbinder zum Verbinden keramischer Komponenten eines Dentalimplantats gelöst, mit einem Basisabschnitt, an dem ein Basisgewinde zum Einschrauben des Verbinders in einen Basiskörper des Dentalimplantats ausgeformt ist, und mit einem Halteabschnitt, an dem ein Haltegewinde zum Aufschrauben einer Prothetik des Dentalimplantats auf den Verbinder ausgeformt ist.

Des Weiteren wird die Aufgabe mit einer Prothetik für ein Dentalimplantat gelöst, mit einem Gegenhaltegewinde zum Aufschrauben einer Prothetik auf einen Verbinder des Dentalimplantats.

Ferner wird die Aufgabe mit einem Basiskörper für ein Dentalimplantat gelöst, mit einem Innengewinde, das komplementär zu einem Basisgewinde eines erfindungsgemässen Verbinders ausgestaltet ist und/oder mit einer Aufnahme, die komplementär zu einer erfindungsgemässen Prothetik ausgestaltet ist.

Schliesslich wird die Aufgabe durch einen Verbindungssystem für ein Dentalimplantat gelöst, mit wenigstens einem erfindungsgemässen Verbinder und/oder mit wenigstens einer erfindungsgemässen Prothetik und/oder mit wenigstens einem erfindungsgemässen Basiskörper.

Gemäss einer weiteren Ausführungsform ist vorgesehen, dass der Verbinder aus einem Metall oder einer Metalllegierung, vorzugsweise zumindest anteilig aus Titan, gefertigt ist. Somit weist der Verbinder eine höhere Elastizität als die aus Keramik gefertigten Komponenten des Dentalimplantates, wie beispielsweise der Basiskörper, die Prothetik und das Abutment auf. In Anbetracht dessen, dass diese keramischen Komponenten aufgrund entsprechender Werkstoffeigenschaften insbesondere Zugkräfte, Biegemomente und Scherspannungen schlechter aufnehmen können als metallische Komponenten, hilft der Einsatz des metallischen Verbinders, dem gesamten Dentalimplantat eine vorteilhafte Dauerfestigkeit und Widerstandsfähigkeit zu verleihen, indem es einerseits von der Druckfestigkeit, Abriebfestigkeit und Biokompatibilität der Keramik und andererseits der Elastizität und Zähigkeit des metallischen Verbinders profitiert.

Durch eine derartige Kombination von Keramik und Metall stellt ein erfindungsgemässes Verbindungsystem sozusagen ein hybrides Dentalimplantatsystem dar. Dabei ist es für das Zahnfleisch Ideal, keinen Kontakt zu metallischen Verbinder zu haben. Dies wird erfindungsgemäss dadurch erreicht, dass der Verbinder vorteilhafterweise innerhalb eines von Basiskörper und Prothetik gebildeten Innenraums des Dentalimplantats oder zumindest durch Basiskörper und/oder Prothetik vom Zahnfleisch beabstandet angeordnet ist. Der Innenraum ist vorteilhafterweise hermetisch abgeschlossen, indem eine Kontaktfläche der Prothetik abdichtend auf einer Kontaktfläche des Basiskörpers aufliegt.

Gemäss einer weiteren vorteilhaften Ausführungsform ist vorgesehen, dass der Verbinder zwischen dem Basisabschnitt und dem Halteabschnitt wenigstens ein Schulterelement aufweist, dass in einer radialen Richtung des Verbinders zumindest abschnittsweise über einen Aussenumfang des Basisabschnitts und/oder des Halteabschnitts hinweg ragt. Das Schulterelement kann sowohl zur Handhabung des Verbinders als solchen dienen als auch einen Anschlag für den Verbinder ausbilden. So kann der Verbinder bis zum Schulterelement als Anschlag am Basiskörper in den Basiskörper eingeschraubt werden. Das Schulterelement hilft also, den Verbinder präzise und unter taktiler und/oder optischer Rückmeldung im Basiskörper zu befestigen. Mit dem Basisgewinde in den Basiskörper eingeschraubt, kann der Verbinder durch das Haltegewinde eine Anbringungsmöglichkeit für vielerlei Prothetiken bzw. für Austauschprothetiken aus Verschleiss- oder ästhetischen Gründen bereitstellen.

Gemäss einer weiteren vorteilhaften Ausführungsform ist vorgesehen, dass das wenigstens eine Schulterelement an einem Ringbund ausgeformt ist, dessen Aussendurchmesser grösser ist als ein Aussendurchmesser des Basisabschnitts und/oder des Halteabschnitts. Der Ringbund kann konzentrisch zum Basisgewinde und/oder Haltegewinde angeordnet sein. Somit trägt der Ringbund zu einer gleichmässigen Kräfteübertragung zwischen Verbinder und Prothetik und/oder zwischen Verbinder und Basiskörper bei.

Gemäss einer weiteren vorteilhaften Ausführungsform ist vorgesehen, dass am Verbinder wenigstens ein Eingriffsmittel ausgeformt ist zum Betätigen des Verbinders mit einem Werkzeug. Das Eingriffsmittel hilft, ein vorteilhafterweise komplementär zum Eingriffsmittel ausgestaltetes Werkzeug präzise am Verbinder anzusetzen und den jeweiligen Anforderungen entsprechend Kräfte und/oder Momente vom Werkzeug auf den Verbinder zu übertragen.

Gemäss einer weiteren vorteilhaften Ausführungsform ist vorgesehen, dass das wenigstens eine Eingriffsmittel zumindest abschnittsweise mit einer Aussenprofilierung versehen ist. Beispielsweise kann die Aussenprofilierung als Aussensechskant ausgeformt sein. Ein Aussendurchmesser der Aussenprofilierung kann beispielsweise kleiner sein als ein Aussendurchmesser von Basisgewinde und/oder Haltegewinde. Dies ermöglicht ein radiales Spiel zwischen Eingriffsmittel und anderen Komponenten des Dentalimplantats, insbesondere jeweiliger Innenumfänge von Basiskörper und/oder Prothetik. Ein derartiges radiales Spiel hilft, eine Überbestimmung von Toleranzen der Komponenten des Dentalimplantates zu vermeiden sowie gewisse Freiheitsgrade bei der Handhabung der Komponenten sowie deren Montage bereitzustellen.

Gemäss einer weiteren vorteilhaften Ausführungsform ist vorgesehen, dass ein Kopfende des Verbinders als das wenigstens eine Eingriffsmittel ausgestaltet ist. Somit bleibt das Eingriffsmittel des in den Basiskörper eingesetzten Verbinders gut zugänglich. Die Zugänglichkeit kann beispielsweise verbessert werden, indem das Kopfende des Verbinders in einem vollständig in den Basiskörper eingesetzten Zustand des Verbinders entgegen einer Einsetzrichtung über eine Oberkante des Basiskörpers hinaus ragt. Alternativ oder zusätzlich kann das Eingriffsmittel an einem Ringbund oder als solcher am Verbinder ausgeformt sein.

Gemäss einer weiteren vorteilhaften Ausführungsform ist vorgesehen, dass wenigstens eine Ringnut zwischen dem Basisabschnitt und dem Halterabschnitt ausgeformt ist, an der sich der Aussenumfang des Verbinders gegenüber den jeweils umliegenden Abschnitten verjüngt. Eine derartige Ringnut hilft zum einen, ungewünschtes Verkanten, Reiben oder Anschlagen des Verbinders beim Einsetzen des Verbinders in den Basiskörper oder beim Aufsetzen der Prothetik auf den Verbinder zu verhindern. Zum anderen helfen derartige Ringnuten, dem Verbinder gezielt gewünschte Elastizitäten zu verleihen bzw. seine Biegsamkeit an gewünschter Stelle zu erhöhen, damit beispielsweise eher der Verbinder nachgibt, als dass die Kontaktflächen zwischen Verbinder und Keramik und/oder Kontaktflächen zwischen Keramiken durch unausgewogene Belastungen überstrapaziert werden.

Gemäss einer weiteren vorteilhaften Ausführungsform ist vorgesehen, dass das Basisgewinde und/oder das Haltegewinde als Linksgewinde ausgestaltet sind bzw. ist. Gewinde von Implantaten sind in der Regel als Rechtsgewinde ausgestaltet. Einer Ausgestaltung des Basisgewindes und/oder des Haltegewindes als Linksgewinde hilft zu verhindern, dass sich eine Verschraubung ungewünscht löst. Wenn beispielsweise das Haltegewinde als Rechtsgewinde und das Basisgewinde als Linksgewinde ausgestaltet ist, dann kann die Prothetik vom Haltegewinde abgeschraubt werden, ohne dass die Verschraubung zwischen Verbinder und Basiskörper dabei gelöst wird.

Bei einer erfindungsgemässen Prothetik kann die erfindungsgemässe Lösung gemäss einer ersten weiteren vorteilhaften Ausführungsform dadurch verbessert werden, dass der Gegenhalteabschnitt mit einem Sackloch versehen ist, in dem das Gegenhaltegewinde angeordnet ist. Durch die Anordnung des Gegenhaltegewindes im Sackloch kann das Gegenhaltegewinde bzw. ein oberer Endabschnitt des Verbinders von der Prothetik umschlossen sein. Mit anderen Worten kann die Prothetik kappenartig auf den Verbinder aufgesetzt werden. Dies hilft, einen hermetisch abgeschlossenen Innenraum des Dentalimplantates zwischen Prothetik und Basiskörper zu bilden. In diesem Innenraum kann der Verbinder von der Umgebung des Dentalimplantates, sprich Zahnfleisch und Mundraum, abgeschirmt aufgenommen sein.

Gemäss einer weiteren vorteilhaften Ausführungsform ist vorgesehen, dass das Gegenhaltegewinde zumindest abschnittsweise entlang eines Fortsatzes der Prothetik verläuft, der dazu ausgestaltet ist, in eine Aufnahme eines Basiskörpers des Dentalimplantats einzugreifen. Somit kann die Prothetik sich in radialer Richtung mit dem Basiskörper überdecken. Dies hilft zum einen bei der Montage der Prothetik, diese gegenüber dem Basiskörper zu positionieren bzw. zentrieren. Zum anderen hilft die Überdeckung, eine hohe Stabilität des Dentalimplantats und eine Abdichtung dessen Innenraumes zu gewährleisten.

Bei einem erfindungsgemässen Verbindungsystem kann die erfindungsgemässe Lösung gemäss einer ersten weiteren vorteilhaften Ausführungsform dadurch verbessert werden, dass in einem Endmontagezustand des Dentalimplantats der Verbinder in einem von Prothetik und Basiskörper umschlossenen Innenraum des Dentalimplantats aufgenommen ist. Somit können insbesondere aus Metallen oder Metalllegierungen gefertigte Verbinder bzw. Einheitsverbinder im Innenraum angeordnet von vorzugsweise aus keramischen Werkstoffen gefertigten Basiskörpern und Prothetiken umgeben sein, um einen Kontakt der Verbinder zum Zahnfleisch zu vermeiden. Dabei ist es weiterhin von Vorteil, wenn der Innenraum hermetisch abgedichtet ist. Dazu sollte die Prothetik im Endmontagezustand bündig abdichtend am Basiskörper anliegen.

Vor dem Endmontagezustand kann der Verbinder in einem Vormontagezustand des Dentalimplantates entweder zuerst mit dem Basiskörper oder mit der Prothetik verbunden sein. Wenn der Verbinder im Vormontagezustand mit dem Basiskörper verbunden ist, dann kann er mit seinem Basisgewinde in den Basiskörper eingesetzt sein, während sein Haltegewinde von Aussehalb des Basiskörpers zugänglich angeordnet ist, um die Prothetik daran zu befestigen und somit das Dentalimplantat vom Vormontagezustand in den Endmontagezustand zu überführen. Wenn der Verbinder im Vormontagezustand mit der Prothetik verbunden ist, dann lassen sich diese wie eine Implantatschraube handhaben, die zum Überführen des Dentalimplantats vom Vormontagezustand in den Endmontagezustand in den Basiskörper eingeschraubt wird.

Ferner betrifft die Erfindung einen Einheitsverbinder zum Verbinden eines Abutments eines Dentalimplantats mit einem Basiskörper des Dentalimplantat, umfassend einen entlang einer Einsetzrichtung in den Basiskörper einsetzbaren und darin fixierbaren Basisabschnitt und einen Abutmenthalteabschnitt zum Halten des Abutments am Basiskörper, wobei der Abutmenthalteabschnitt wenigstens zwei entlang der Einsetzrichtung voneinander beabstandete Haltepositionen für das Abutment bereitstellt.

Die Erfindung betrifft weiter ein Einheitsverbindungssystem für Dentalimplantate umfassend mindestens einen erfindungsgemässen Einheitsverbinder. Mit Hilfe des Einheitsverbinders kann das Einheitsverbinder System für eine Vielzahl verschieden grosser und verschiedenartiger Dentalimplantate verwendet werden. Neben wenigstens einem Einheitsverbinder kann das Einheitsverbindungssystem noch weitere Elemente, wie Halteelemente, Zusatzhalteelemente sowie mit diesen und/oder dem Einheitsverbinder zusammenwirkende Werk und/oder Messzeuge beinhalten.

In der Regel weisen sowohl der Basiskörper als auch das Abutment Bohrungen auf, welche den Einheitsverbinder aufnehmen können, wobei im zusammengesetzten Zustand des Dentalimplantats ein unterer Bereich des Einheitsverbinders sich im Basiskörper befindet und ein oberer Bereich des Einheitsverbinders sich im Abutment befindet. Der Einheitsverbinder kann je nach Länge des Basiskörpers als auch des Abutments oben aus dem Abutment herausragen. Bevorzugt ist der erste Endbereich beim Einsetzen des Einheitsverbinders in den Basiskörper mit dem Basiskörper verbindbar, vorzugsweise fest verankerbar. Optional kann der Einheitsverbinder in den Basiskörper eingeklebt oder alternativ bajonettverschlussartig verbunden werden.

Der Einheitsverbinder bietet den Vorteil, dass er dank der veränderbaren Länge für Dentalimplantate von verschiedener Grösse verwendet werden kann. Bei herkömmlichen Lösungen mit konventionellen Schrauben hingegen müssen die Grössen bzw. Längen der Bestandteile mit der Schraube genau abgestimmt sein, um eine verlässliche Verbindung von Basiskörper und Abutment zu gewährleisten. Indem der erfindungsgemässe Einheitsverbinder wenigstens zwei Haltepositionen bereitstellt, ermöglicht er es sowohl bei verschieden grossen Basiskörper als auch verschieden grossen Abutments eingesetzt zu werden. Somit kann beispielsweise bei gesamten Serien für Dentalimplantate eine formschlüssig abgedichtete Verbindung des Basiskörpers mit dem Abutment durch den gleichen Einheitsverbinder erzielt werden, der vorteilhafterweise möglichst tief im Basiskörper verankert sein kann. Dies hilft zum einen, einen stabilen Aufbau des Dentalimplantates zu gewährleisten. Zum anderen lassen sich durch eine gegenüber dem Stand der Technik erhöhte Variabilität Produktionskosten für Dentalimplantate senken und deren Anwendung vereinfachen.

Durch die Wirkverbindung des zweiten Endbereichs des Einheitsverbinders mit dem Abutment kann der Einheitsverbinder den Basiskörper mit dem Abutment, vorzugsweise kraft und formschlüssig abdichtend, verbinden. Die Wirkverbindung kann u.a. formschlüssig, kraftschlüssig und/oder stoffschlüssig, u.a. auch indirekt über ein Halte- bzw. Verbindungsmittel, wie z.B. in Ausgestaltung einer Hülse, erfolgen. Formschlüssig ist im dem Fachmann bekannten Rahmen der Fertigung der Bestandteile des Dentalimplantats zu verstehen. Abdichtend ist im Zusammenhang mit der Verbindung zwischen dem Abutment und dem Basiskörper so zu verstehen, dass die Kontaktflächen zwischen dem Basiskörper und dem Abutment so dicht sind, dass z.B. keine Bakterien zwischen Basiskörper und Abutment eindringen können, was dabei hilft Periimplantitis zu vermeiden.

Ein erfindungsgemässer Einheitsverbinder lässt sich insbesondere durch die Abdichtung bei mehrteiligen Dentalimplantaten aus Keramik besonders vorteilhaft einsetzen. Bei derartigen Dentalimplantaten ist in der Regel ein Innenraum bzw. eine Kavität zwischen Basiskörper und Abutment gebildet. Bei ordnungsgemässer Montage des Abutments am Basiskörper ist der Innenraum hermetisch gegenüber Kieferknochen und Zahnfleisch abgedichtet. Der Einheitsverbinder kann daher von Kieferknochen und Zahnfleisch isoliert im Innenraum aufgenommen sein. Somit kann der Einheitsverbinder auch aus anderen Materialien als Keramik, beispielsweise rostfreier Stahl und/oder Titan o.ä., gefertigt sein, ohne Abstriche bei der Biokompatibilität des Dentalimplantates machen zu müssen, weil diese durch die keramische Beschaffenheit der den Einheitsverbinder umhüllenden Komponenten des Implantates gewährleistet ist.

Die erfindungsgemässe Lösung lässt sich mit den folgenden weiteren, jeweils für sich vorteilhaften erfindungsgemässen Ausführungsformen beliebig kombinieren und weiter verbessern.

Gemäss einer ersten weiteren Ausführungsform sind die Haltepositionen stufenlos variabel wählbar. Eine stufenlos variable Wählbarkeit der Haltepositionen erlaubt es, eine Vielzahl verschiedenartiger Basiskörper und Abutments mit dem gleichen Typ Einheitsverbinder miteinander zu verbinden. Auch hilft die stufenlos variable Wählbarkeit der Haltepositionen dabei, etwaige Fertigungstoleranzen sowie Abweichungen oder Ungleichmässigkeiten beim Implantieren bzw. Aufbauen des Implantats auszugleichen.

Gemäss einer weiteren Ausführungsform ist vorgesehen, dass der Basisabschnitt ein erstes Aussengewinde aufweist, welches mit einem Innengewinde des Basiskörpers in Eingriff bringbar ausgestaltet ist und die wenigstens zwei Haltepositionen bereitstellt. Durch das Aussengewinde kann der Einheitsverbinder auf einfache Weise in den Basiskörper eingeschraubt und somit form- sowie kraftschlüssig damit verbunden werden. Entlang des Aussengewindes können die Haltepositionen stufenlos variabel wählbar bereitgestellt sein.

Gemäss einer weiteren Ausführungsform eines erfindungsgemässen Einheitsverbinders ist vorgesehen, dass eine parallel zur Einsetzrichtung gemessene Länge des ersten Aussengewindes im Wesentlichen mit einer parallel zur Einsetzrichtung gemessene Länge des Innengewindes übereinstimmt oder zumindest lediglich geringfügig die Länge des Innengewindes unterschreitet. Somit können Innengewinde und Aussengewinde sich im Wesentlichen vollständig überdecken. Zum einen hilft dies, durch die Dimensionierung der Gewinde selber einen unteren Anschlag für den Einheitsverbinder bereitzustellen und somit seinen Einsetzweg in Einsetzrichtung zu begrenzen. Zum anderen ist die form- und kraftschlüssige Verbindung zwischen Einheitsverbinder und Basiskörper präzise auf den Bereich besagter Gewinde beschränkt und darin konzentriert. Unnötige Gewindegänge und damit verbundene Materialschwächungen sind vermieden.

Gemäss einer weiteren Ausführungsform eines erfindungsgemässen Einheitsverbinders ist vorgesehen, dass der Einheitsverbinder zwischen dem Basisabschnitt und dem Abutmenthalteabschnitt einen zylinderförmigen Schaftabschnitt aufweist. Somit kann der Einheitsverbinder als eine Art Stehbolzen mit je einem Gewinde an jedem Ende hergestellt werden. Der Schaftabschnitt begünstigt eine möglichst spielfreie Aufnahme des Einheitsverbinders sowohl im Basiskörper als auch im Abutment. Etwaige Querkräfte oder Momente können über möglichst mit geringem Spiel bzw. spielfrei dimensionierte Anlageflächen zwischen Schaftabschnitt und Basiskörper einerseits sowie zwischen Schaftabschnitt und Abutment andererseits übertragen werden, was dabei hilft, die Robustheit und Langlebigkeit des gesamten Dentalimplantats zu verbessern.

Gemäss einer weiteren Ausführungsform weist der Schaftabschnitt wenigstens teilweise einen grösseren Durchmesser als der Basisabschnitt auf. Im Bereich der Durchmesseränderung kann ein Anschlag bzw. eine Abstufung gebildet sein, welcher hilft, einen Einsetzweg des Einheitsverbinders in Einsetzrichtung zu begrenzen. Darüber hinaus ermöglicht diese Ausführungsform, den Schaftabschnitt derart stabil auszugestalten, dass in Querrichtung bzw. radial zur Mittelachse des Schaftabschnittes bzw. Einheitsverbinders wirkende Kräfte sicher aufgenommen und abgetragen werden können. Im Gegensatz dazu können Gewinde im Basisabschnitt und im Abutmenthalteabschnitt zur Aufnahme von parallel zur Einsetzrichtung wirkenden Zugkräften ausgestaltet sein, was dabei hilft, die Abmasse der einzelnen Bestandteile des Dentalimplantates zu optimieren. Des Weiteren bietet diese Ausführungsform den Vorteil, dass ein Kontakt zwischen Basisabschnitt und der Innenwand der Bohrung des Basiskörpers bei der Einführung des Einheitsverbinders in die Bohrung des Basiskörpers minimiert werden kann. Bei einem Gewinde im Basisabschnitt kann zum Beispiel ein Kontakt zwischen dem Gewinde und der Innenwand der Bohrung des Basiskörpers bei der Einführung des Einheitsverbinders zu Beschädigungen führen, was insbesondere für Basiskörper aus Keramik kritisch sein kann. Durch eine Abstufung kann somit vorteilhafterweise eine Führung des Einheitsverbinders durch den Schaft sichergestellt und eine nachteilhafte Beschädigung des Basiskörpers durch Kontakt der Innenwand mit dem Basisabschnitt minimiert werden. Vorzugsweise weist die Bohrung des Basiskörpers im unteren Bereich anschliessend eine dem ersten Endbereich des Einheitsverbinders entsprechende verengte Bohrung auf, in welche der Basisabschnitt des Einheitsverbinders eingreifen bzw. möglichst bündig damit abschliessend eingesetzt werden kann.

Gemäss einer weiteren Ausführungsform ist ein mit den Abutmenthalteabschnitt umgreifendes Halteelement vorgesehen, das dazu ausgestaltet ist, zum Halten des Abutments mit dem Abutmenthalteabschnitt zusammenzuwirken. Das Halteelement kann in den wenigstens zwei Haltepositionen am Einheitsverbinder fixierbar bzw. arretierbar ausgestaltet sein oder zumindest derart mit dem Einheitsverbinder zusammenwirken, dass es im Wesentlichen parallel zur Einsetzrichtung wirkende Kräfte vom Einheitsverbinder aufnehmen und an diesen übertragen kann. Verschiedene Halteelemente können mit jeweils dem gleichen Einheitsverbinder kombiniert werden, um diesen mit verschiedenartigen Basiskörpern und/oder Abutments zusammen verwenden zu können.

Gemäss einer weiteren Ausführungsform des Einheitsverbinders ist vorgesehen, dass das Halteelement wenigstens eine zumindest teilweise entgegen der Einsetzrichtung weisende Haltefläche zum Halten des Abutments aufweist. Die Haltefläche kann den jeweiligen Anforderungen gemäss ausgestaltet sein, um im Wesentlichen parallel zur Einsetzrichtung wirkende Kräfte zu übertragen. Die Ausgestaltung der Haltefläche kann für den jeweiligen Basiskörper bzw. das jeweilige Abutment optimiert sein.

Gemäss einer weiteren Ausführungsform des Einheitsverbinders ist vorgesehen, dass der Abutmenthalteabschnitt mit wenigstens einem Haltegewinde zum form- und kraftschlüssigen Zusammenwirken mit dem Halteelement versehen ist. Somit kann das Halteelement einfach am Haltegewinde auf den Einheitsverbinder geschraubt werden. Das Halteelement ist mit einem entsprechenden Gewinde ausgestattet, dass komplementär zum Haltegewinde ausgestaltet ist. Dies ermöglicht es, eine Vielzahl weitestgehend frei variabel wähl und justierbare Haltepositionen bereitzustellen. Sobald der Einheitsverbinder ordnungsgemäss in den Basiskörper eingesetzt ist, kann das Abutment mit Hilfe des Halteelements einfach in gewünschter Position am Basiskörper fixiert werden, indem das Halteelement mit einem angemessenen Drehmoment auf das Haltegewinde des Einheitsverbinders geschraubt wird. Vorteilhafterweise können somit auch insbesondere im Bereich des Basisabschnitts bzw. der Verbindung zwischen Basiskörper und Einheitsverbinder auftretende Fertigungs- und Montagetoleranzen ausgeglichen und eine möglichst bündige, stabile und abgedichtete Verbindung zwischen Abutment und Basiskörper hergestellt werden.

Gemäss einer weiteren Ausführungsform ist das Halteelement hülsenartig mit einer im Wesentlichen zylinderförmigen Aussenkontur ausgestaltet. Über eine derartige Hülse ist der Einheitsverbinder mit dem Abutment zur formschlüssig abgedichteten Verbindung des Abutments und des Basiskörpers auf einfache und effektive Art und Weise verbindbar. In einer vorteilhaften Ausgestaltung wird die Hülse in den Abutmenthalteabschnitt eingreifend über diesen geschoben und drückt beim Eingreifen das Abutment formschlüssig abdichtend gegen den Basiskörper. Unter Schieben versteht der Fachmann in diesem Zusammenhang nicht nur eine transversale Geleitsbewegung, sondern im Allgemeinen eine Positionierung, wobei ein Bestandteil in oder an einem anderen aufgenommen wird. Ein Verschieben kann daher auch ein Verschrauben umfassen bzw. eine Kombination zwischen transversale Geleitbewegung und Verschraubung darstellen, wenn die Hülse zum Beispiel zuerst auf den Abutmenthalteabschnitt gesteckt und nach dem Eingreifen in ein daran vorgesehenes Haltegewinde geschraubt wird.

In der Regel ist die Hülse in einen Hülsenaufnahmebereich der Bohrung des Abutments einführbar und bündig mit diesem abschliessend ausgestaltet. In einer Ausgestaltung beträgt eine im Wesentlichen parallel zur Einsteckrichtung gemessene Länge der Hülse mindestens 50%, vorzugsweise mindestens 75%, besonders vorzugsweise mindestens 85%, der ebenfalls im Wesentlichen parallel zur Einsteckrichtung gemessenen Länge eines Hülsenaufnahmebereichs der Durchgangsbohrung des Abutments. In einer alternativen Ausführung kann die Hülse auch länger als der Hülsenaufnahmebereich der Durchgangsbohrung des Abutments ausgeführt sein. Die Hülse steht dann über das Abutment raus, was eine zusätzliche Stabilität erzeugt.

Gemäss einer weiteren Ausführungsform ist wenigstens ein den Abutmenthalteabschnitt umgreifendes Zusatzhalteelement vorgesehen, das dazu ausgestaltet ist, zum Halten des Abutments mit dem Abutmenthalteabschnitt zusammenzuwirken. Das Zusatzhalteelement kann dazu dienen, das Halteelement bzw. dessen Wirkbereich zu verlängern bzw. es zu stabilisieren oder kontern. Insbesondere kann das Zusatzhalteelement zusätzlich zum Halteelemente Stützfunktionen ausüben. Somit hilft das Zusatzhalteelement dabei, den Einheitsverbinder noch flexibler in Verbindung mit verschiedenen Basiskörpern und/oder Abutments einzusetzen.

Ein Zusatzhalteelement bietet für Ausgestaltungen mit Abutments, welche eine Bohrung mit einem Halteelement bzw. Hülsenaufnahmebereich aufweisen, welcher wesentlich länger (z.B. mehr als doppelt so lang) als das Halteelement ist, den Vorteil, dass nach Einsetzen des Halteelementes der verbliebene Zwischenraum zwischen dem Abutmenthalteabschnitt und der Innenwand des Halteelements bzw. Hülsenaufnahmebereichs der Bohrung des Abutments durch das Zusatzhalteelement besetzt werden kann. Dadurch kann die Stabilität des Dentalimplantats erhöht werden, da die Abstützfläche zwischen Abutment und Einheitsverbinder vergrössert wird.

Gemäss einer weiteren Ausführungsform ist vorgesehen, dass das Halteelement und/oder das Zusatzhalteelement als eine Art Rundmutter mit einem inneren Gewinde versehen sind bzw. ist. Das innere Gewinde ist jeweils komplementär zum am Abutmenthalteabschnitt ausgeformten Gewinde ausgestaltet. Somit lassen sich Halteelement und Zusatzhalteelement einfach auf den Abutmenthalteabschnitt aufschrauben.

Gemäss einer weiteren Ausführungsform ist vorgesehen, dass das Halteelement und/oder das Zusatzhalteelement ein Eingriffsmittel aufweisen bzw. aufweist, an dem ein Werkzeug zum Betätigen des Halteelements und/oder des Zusatzhalteelements abstützbar ist. Insbesondere kann das Eingriffsmittel komplementär zu einem Gegeneingriffsmittel eines Spezialwerkzeugs ausgestaltet sein, mit welchem Halteelement bzw. Zusatzhalteelement betätigbar sind. Bei auf den Abutmenthalteabschnitt aufschraubbarem Halteelement bzw. Zusatzhalteelement ist das Eingriffsmittel so ausgestaltet, dass ein Drehmoment zum Aufschrauben von Halteelement bzw. Zusatzhalteelement auf diese übertragbar ist. Eingriffsmittel können in einer Ausgestaltung an einem Ende des Halteelementes bzw. Zusatzhalteelements, vorzugsweise axialsymmetrisch daran angeordnete und ausgeformte Nuten sein.

Gemäss einer zusätzlichen Ausführungsform ist vorgesehen, dass eine im Wesentlichen parallel zur Einsetzrichtung gemessene Länge des Einheitsverbinders veränderbar ist. Dies bietet den Vorteil, dass der Einheitsverbinder bei verschieden grossen Dentalimplantaten mit einer für den Einheitsverbinder zu grossen oder zu kleinen Länge gekürzt bzw. verlängert werden kann.

Gemäss einer weiteren Ausführungsform ist vorgesehen, dass der Einheitsverbinder in Abhängigkeit der Grösse des Dentalimplantats an vorgegebenen Ablängmarkierungen ablängbar ausgestaltet ist. Die Ablängmarkierungen erlauben es, den Einheitsverbinder vor, während oder nach seinem Einsetzen auf die gewünschte Länge präzise abzulängen. Insbesondere bietet dies den Vorteil, dass der Einheitsverbinder für kleine Dentalimplantate, für welche der Basiskörper kurz ist, angepasst werden kann, indem die Länge des Einheitsverbinders gekürzt wird. Bevorzugt ist der Basisabschnitt und/oder der Abutmenthalteabschnitt von einer ausreichenden Länge, so dass nach einer Kürzung des Einheitsverbinders der Basisabschnitt und/oder der Abutmenthalteabschnitt noch eine ausreichende Länge aufweisen, um eine Verbindung mit dem Basiskörper und/oder eine Wirkverbindung mit dem Abutment sicherzustellen.

Gemäss einer weiteren Ausführungsform ist vorgesehen, dass die Ablängmarkierungen als Sollbruchstellen ausgeformt sind. Die Sollbruchstellen vereinfachen ein präzises Ablängen des Einheitsverbinders und verhindern unerwünschte Beschädigungen beim Ablängen. In Ausgestaltungen, bei welchen der Basisabschnitt und/oder der Abutmenthalteabschnitt ein Gewinde aufweisen, erstreckt sich das Gewinde vorteilhafterweise über eine derart ausreichende Länge entlang der Einsetzrichtung, dass auch nach einer Kürzung ein ausreichendes Gewindestück verbleibt, um eine Verbindung mit dem Basiskörper und/oder mit dem Abutment sicherzustellen. In einer besonders vorteilhaften Ausgestaltung ist der Abutmenthalteabschnitt länger als der Basisabschnitt. Wenn dann der Einheitsverbinder im Bereich des Abutmenthalteabschnitts abgelängt wird, bleiben Basisabschnitt und Basiskörper davon unberührt.

Gemäss einer weiteren Ausführungsform ist vorgesehen, dass der Abutmenthalteabschnitt und/oder der Basisabschnitt mit einer Verbinderverlängerung, vorzugsweise in Form einer Bolzenverlängerung oder Schraubenverlängerung, in Eingriff bringbar ausgestaltet ist. Vorzugsweise kann zum Verlängern eine Bolzenverlängerung oder Schraubenverlängerung vorgesehen sein, die einen Aussendurchmesser aufweist, welcher mit dem Aussendurchmesser des Einheitsverbinders übereinstimmt, so dass sich bezüglich der Führung des Abutments und/oder eines Halteelementes und der radialen Positionierung des Einheitsverbinders in der Durchgangsbohrung des Abutments keine Änderungen ergeben. Bei Ausgestaltungen mit einem Aussengewinde im Basisabschnitt und einem Haltegewinde im Abutmenthalteabschnitt bietet die Verbinderverlängerung den Vorteil, dass der Einheitsverbinder auf flexible Weise je nach Erfordernis an beiden Enden verlängert werden kann. Bei Ausgestaltungen mit einem zylinderförmigen Schaftabschnitt ist der Aussendurchmesser der Rundmutter vorteilhafterweise gleich dem Aussendurchmesser des Schaftabschnittes, so dass ein stufenloser Übergang zwischen Schaftabschnitt und der Verbinderverlängerung ermöglicht wird. Ausserdem kann der Einheitsverbinder bei grossen Dentalimplantaten mit einer ansonsten für den Einheitsverbinder zu grossen Länge angepasst bzw. verlängert werden kann. Vorzugsweise weist die Bolzenverlängerung oder Schraubenverlängerung einen Aussendurchmesser auf, welche mit dem Aussendurchmesser des Einheitsverbinders übereinstimmt, so dass sich bezüglich der Führung des Einheitsverbinders und der radialen Positionierung in der Bohrung des Basiskörpers keine Änderungen ergeben.

Ein erfindungsgemässer Einheitsverbinder samt etwaigen Halte und/oder Verlängerungselementen kann gemäss einer weiteren Ausführungsform wendbar ausgestaltet sein, sodass die Funktion von Basis und Abutmenthalteabschnitt den jeweiligen Anforderungen gemäss beliebig miteinander getauscht werden kann. Die Dimensionen von Basis und Abutmenthalteabschnitt können so auf verschiedenartigen Basiskörper bzw. Abutments abgestimmt sein, dass beispielsweise für gewisse Grössen und Typen der Basiskörper der Basisabschnitt und bei anderen Grössen und Typen der Abutmenthalteabschnitt darin eingesetzt und somit zum Basishalteabschnitt wird, während dieser dann die Funktion des Abutmenthalteabschnitt erfüllt. Durch eine derartige Wendefunktion lässt sich die Variabilität des Einheitsverbinders erhöhen.

Beim erfindungsgemässen Einheitsverbindungssystem kann die erfindungsgemässe Lösung dadurch weiter verbessert werden, dass das Einheitsverbindungssystem des Weiteren wenigstens einen in einen Kieferknochen einsetzbaren Basiskörper und/oder wenigstens ein Abutmenthalteabschnitt umfasst, die dazu ausgestaltet sind, mit dem Einheitsverbinder zusammenzuwirken. Einen in einen Kieferknochen einsetzbaren Basiskörper, ein mit dem Basiskörper formschlüssig verbindbares Abutment, und einen Einheitsverbinder gemäss der vorliegenden Offenbarung erlauben es, besonders kostengünstig flexibel einsetzbare Serien von Dentalimplantaten bereitzustellen, die modulartig miteinander kombinierbare Bestandteile umfassen.

Gemäss einer weiteren Ausführungsform eines erfindungsgemässen Einheitsverbindungssystems ist vorgesehen, dass der Basiskörper eine Bohrung zur Aufnahme des Einheitsverbinders aufweist bzw. dass das Abutment eine im Wesentlichen parallel zur Einsetzrichtung verlaufende Durchgangsbohrung aufweist, in der wenigstens eine Schulter angeordnet ist, die einen entgegen der Einsetzrichtung weisenden Anschlag für den Einheitsverbinder ausbildet. Das Abutment weist also in der Regel eine durchgehende Bohrung und auf der Innenseite der Bohrung eine Schulter, beispielsweise in Form einer Abstufung, auf, über welche das Abutment an den Basiskörper abdichtend anpressbar ist.

Gemäss einer weiteren Ausführungsform ist vorgesehen, dass die Bohrung des Basiskörpers in einer Abutment abgewandten Hälfte des Basiskörpers ein mit dem Basisabschnitt in Eingriff bringbares Innengewinde aufweist. Somit kann der Einheitsverbinder einfach in den Basiskörper eingeschraubt werden. Die Anordnung des Innengewindes in der vom Abutment abgewandten Hälfte des Basiskörpers ermöglicht es bei gleichzeitiger seitlicher Abstützung des Einheitsverbinders in oberhalb des Innengewindes liegenden Abschnitten des Basiskörpers, im Wesentlichen lediglich parallel zur Einsetzrichtung verlaufende Zug oder Drucckräfte am Innengewinde vorliegen zu haben, wodurch die Gefahr von Beschädigungen, beispielsweise Brüchen oder Rissen, im Bereich des Innengewindes vermieden werden, die insbesondere dann auftreten können, wenn Gewindegänge und ungünstige Krafteinleitungen zu unerwünschten Kerbwirkungen führen.

Mit anderen Worten bietet eine Anordnung des Innengewindes in der dem Abutment abgewandten Hälfte des Basiskörpers den Vorteil, dass die auftretenden Kräfte am Innengewinde in den unteren Bereich des Basiskörpers geleitet und daher vom Kontaktbereich zum Abutment entfernt gehalten werden können. Dies führt vorteilhafterweise dazu, dass Zug und Scherspannungen im Kontaktbereich zwischen Abutment und Basiskörper, insbesondere an Auflageflächen, im Wesentlichen vermieden werden können. Vorteilhafterweise verbleiben im Kontaktbereich hauptsächlich Druckspannungen, was insbesondere für Keramikbestandteile vorteilhaft ist, da das Keramikmaterial zwar druckkraftstabil, aber eher zugkraftinstabil ist. Diese Anordnung bietet daher den Vorteil, dass die Stabilität und somit der Langzeiterfolg des Dentalimplantats erhöht werden kann.

Gemäss einer weiteren Ausführungsform ist vorgesehen, dass ein grösster Aussendurchmesser des Einheitsverbinders zumindest in einer unteren Hälfte des Einheitsverbinders derart auf einen kleinsten Innendurchmesser der Bohrung des Basiskörpers abgestimmt ist, dass der Einheitsverbinder beim Einsetzen in die Bohrung im Wesentlichen spielfrei im Basiskörper geführt ist. Die spielfreie Führung hilft dabei, den Einbau des Einheitsverbinders zu vereinfachen und die Langzeitstabilität des gesamten Implantats zu erhöhen.

Gemäss einer weiteren Ausführungsform ist vorgesehen, dass ein kleinster Innendurchmesser der Durchgangsbohrung des Abutments derart auf einen grössten Aussendurchmesser des Halteelementes und/oder des Zusatzhalteelements abgestimmt ist, dass das Halteelement und/oder das Zusatzhalteelement im Wesentlichen spielfrei im Abutment geführt sind bzw. ist. Bevorzugt weist die Bohrung des Abutments einen dem Basiskörper zugewandten unteren Bereich mit einem kleineren Durchmesser als dem Durchmesser eines dem Basiskörper abgewandten oberen Bereichs der Bohrung des Abutments auf, welcher einen Aufnahmebereich für das Halteelement und/oder das Zusatzhalteelement bildet, wobei die beiden Bereiche über die Abstufung so aneinander angrenzen, dass das Abutment durch Anschlag der Hülse an der Abstufung in axialer Richtung des Dentalimplantats in den Basiskörper formschlüssig abdichtend anpressbar ist. In Ausgestaltungen des Abutments mit einer Abstufung beträgt die Länge der Hülse vorzugsweise mindestens 50%, besonders vorzugsweise mindestens 75%, ganz besonders vorzugsweise mindestens 85%, der Länge des oberen Bereichs, bzw. des Hülsenaufnahmebereichs, der Bohrung des Abutments.

Gemäss einer weiteren Ausführungsform ist vorgesehen, dass die Bohrung im Basiskörper als eine durchgehende Bohrung ausgestaltet ist und am unteren Ende eine Kappe aufweist, welche die Bohrung wenigstens teilweise abdeckt und welche mit einem Teil des Basisabschnitts des Einheitsverbinders in Eingriff bringbar und beim Einsetzen des Einheitsverbinders vom Basiskörper derart abtrennbar ausgestaltet ist, dass in einem vollständig in den Kieferknochen eingesetzten Zustand von Basiskörper und Einheitsverbinder das untere Ende des Einheitsverbinders die Kappe in den Kieferknochen presst. Mit der vom Basiskörper trennbaren Kappe kann vorteilhafterweise die Flexibilität des Dentalimplantats weiter erhöht werden. Bei einem zu langen Einheitsverbinder in Bezug auf den Basiskörper kann der Einheitsverbinder so weit in den Basiskörper eingeführt, bzw. eingeschraubt (in Ausgestaltungen mit einem ersten Gewinde im ersten Endbereich) werden, bis der Einheitsverbinder an der Kappe anschlägt, die Kappe schliesslich vom Basiskörper trennt und weiter in den Kieferknochen presst. Die Stabilität der Verankerung des Dentalimplantats kann mit der weiter in den Kieferknochen gepressten Kappe mit Vorteil erhöht werden. Mit Vorteil kann die durch die getrennte Kappe entstehende zusätzliche Fläche den Osseointegrationsgrad erhöhen helfen.

Alternativ ist die Bohrung des Basiskörpers als Sackloch ausgebildet. Bevorzugt beträgt die Länge des Sackloches mindestens 80%, besonders bevorzugt mindestens 90% der Gesamtlänge des Basiskörpers. Dies bietet den Vorteil, dass die gesamte Länge des Basiskörpers zur Aufnahme von Kräften, z.B. Schraubkräften, bei der Verbindung des Einheitsverbinders mit dem Basiskörper dienen kann.

Gemäss einer weiteren Ausführungsform ist vorgesehen, dass zwischen einem grössten Aussendurchmesser des Halteelementes und/oder des Zusatzhalteelementes und dem kleinsten Innendurchmesser der Durchgangsbohrung des Abutments ein Spalt gebildet ist, dessen Breite vorzugsweise zwischen 0.001 mm und 0.1 mm beträgt. Der Spalt dient dazu, ein ausreichendes Spiel in radialer Richtung zwischen der Hülse und dem Abutment bereitzustellen, so dass eine Überbestimmung vermieden werden kann. Das Spiel ist mit Vorteil aber ausreichend klein, dass die Hülse die Stabilität dadurch erhöhen kann, dass sich das Abutment bei auftretenden Querkräften an der Hülse abstützen kann.

In einer Ausgestaltung ist der Basiskörper aus Keramik, vorzugsweise Zirkoniumoxid oder auf Zirkoniumoxid-Basis, gefertigt. In einer Ausgestaltung ist das Abutment aus Keramik, vorzugsweise aus Zirkoniumoxid oder auf Zirkoniumoxid-Basis, gefertigt. Bevorzugt werden der Basiskörper und/oder das Abutment in Ausgestaltungen aus Keramik durch Pulverspritzgiessverfahren hergestellt. Dies bietet den Vorteil einer kostengünstigen Herstellung. Das Keramikmaterial bietet den Vorteil einer hohen Biokompatibilität sowie eines hohen Osseointegrationsgrads. Weiter bietet das Keramikmaterial im Vergleich zu Titan einen kosmetischen Vorteil bei Zahnfleischrückgang, was bei Dentalimplantaten oft eintritt.

In Ausgestaltungen des Basiskörpers aus Keramik und mit einem Innengewinde ist das Innengewinde vorzugsweise als Rundgewinde ausgebildet. In einer vorteilhaften Variante weist in diesen Ausgestaltungen der erste Endbereich des Einheitsverbinders ein Trapezgewinde auf. Dies bietet den Vorteil, dass die Gewindegänge des Innengewindes beim Einschrauben des Einheitsverbinders geschont werden können. Im Vergleich zu Spitzgewinden, welche sich in das Innengewinde schneiden und somit das Keramikmaterial beschädigen können, kann ein solcher Einheitsverbinder mit einem Trapezgewinde daher den Langzeiterfolg des Dentalimplantats erhöhen.

In einer Ausgestaltung ist der Einheitsverbinder aus Metall, vorzugsweise aus rostfreiem Stahl und/oder Titan, gefertigt.

In einer Ausgestaltung entspricht der grösste Querdurchmesser des Einheitsverbinders in der unteren Hälfte des Einheitsverbinders dem grössten Querdurchmesser der Bohrung des Basiskörpers derart, dass der Einheitsverbinder bei der Aufnahme in die Bohrung führbar ist.

Optional besteht zwischen dem Bereich des Einheitsverbinders, welcher sich nach dem Einsetzen im Basiskörper befindet, und der Innenwand der Bohrung des Basiskörpers ein Spiel, so dass bei der Einführung des Einheitsverbinders in den Basiskörper Beschädigungen aufgrund von Reibung minimiert werden können. Das Spiel ist vorteilhafterweise aber so klein, dass eine zuverlässige Führung bzw. Zentrierung des Einheitsverbinders bereitgestellt wird.

In einer Ausgestaltung entspricht ein Querdurchmesser des Einheitsverbinders dem kleinsten Querdurchmesser der Bohrung des Abutments derart, dass das Abutment beim Einsetzen auf den Basiskörper durch den Einheitsverbinder führbar ist.

Der Einheitsverbinder bietet daher den Vorteil, dass das Abutment beim Positionieren auf den Basiskörper geführt bzw. zentriert werden kann. Vorzugsweise besteht zwischen dem Einheitsverbinder und der Innenwand der Bohrung des Abutments ein Spiel, so dass bei der Positionierung des Abutments auf den Basiskörper Beschädigungen aufgrund von Reibung minimiert werden können. Das Spiel ist vorteilhafterweise aber so klein, dass eine zuverlässige Führung bzw. Zentrierung des Abutments bereitgestellt wird.

In einer Ausgestaltung entspricht der grösste Querdurchmesser der Bohrung des Abutments dem Querdurchmesser der Hülse derart, dass das Abutment in Querrichtung an der Hülse abstützbar ist.

In Ausgestaltungen mit einer abgestuften Bohrung des Abutments und einem Einheitsverbinder mit einem zylindrischen Schaft und einer Hülse entspricht mit Vorteil der kleinere Durchmesser der Bohrung im dem Basiskörper zugewandten unteren Bereich des Abutments dem Aussendurchmesser des zylindrischen Schafts des Einheitsverbinders. Der grössere Durchmesser der Bohrung im dem Basiskörper abgewandten oberen Bereich des Abutments, welcher den Hülsenaufnahmebereich bildet, entspricht mit Vorteil dem Aussendurchmesser der Hülse, so dass sich das Abutment an der Hülse abstützen kann und bei auftretenden Querkräften die Stabilität des Dentalimplantats erhöht werden kann. Im unteren Bereich der Bohrung des Abutments kann sich das Abutment bei auftretenden Querkräften mit Vorteil am zylindrischen Schaft oder teilweise am zweiten Endbereich des Einheitsverbinders abstützen.

In einer Ausgestaltung weist das Abutment einen Fortsatz und der Basiskörper eine Aussparung auf, wobei der Fortsatz in die Aussparung einsteckbar ist. Bevorzugt wird durch den Fortsatz des Abutments und der Aussparung des Basiskörpers ein verdrehsicherer Formschluss bereitgestellt. In einer Variante wird der verdrehsichere Formschluss durch eine radial ungleichmässige Struktur des Fortsatzes (d.h. in tangentialer Richtung) bereitgestellt. In einer weiteren Variante weist der Fortsatz radiale Vorsprünge auf, welche in tangentialer Richtung weisende Anlageflächen ausbilden und in radiale Nuten der Aussparung des Basiskörpers eingreifen können.

### Figurenbeschrieb

Die Erfindung soll nachfolgend anhand von Ausführungsbeispielen im Zusammenhang mit den Figuren und der dazugehörigen Beschreibung näher erläutert werden. Es zeigen:
- Fig. 1: eine Schnittdarstellung einer ersten Ausführungsform eines erfindungsgemässen Einheitsverbinders;
- Fig. 2: eine Schnittdarstellung einer zweiten Ausführungsform eines erfindungsgemässen Einheitsverbinders;
- Fig. 3: eine Schnittdarstellung eines Dentalimplantats mit einer ersten Ausführungsform eines erfindungsgemässen Einheitsverbindungssystems;
- Fig. 4: eine Schnittdarstellung eines Dentalimplantats mit einer zweiten Ausführungsform eines erfindungsgemässen Einheitsverbindungssystems;
- Fig. 5: eine Schnittdarstellung des in Fig. 3 gezeigten Dentalimplantats entlang der in Fig. 3 eingezeichneten Schnittlinie A-A;
- Fig. 6: eine schematische Explosionsdarstellung einer weiteren Ausführungsform eines erfindungsgemässen Dentalimplantats;
- Fig. 7: eine schematische Querschnittsansicht entlang einer Längsachse des in Fig. 6 gezeigten Dentalimplantates in einem Vormontagezustand;
- Fig. 8: eine schematische Querschnittsansicht entlang der Längsachse des in Figs. 6 und 7 gezeigten Dentalimplantates in einem Endmontagezustand;
- Fig. 9: eine schematische Explosionsdarstellung einer zusätzlichen Ausführungsform eines erfindungsgemässen Dentalimplantats;
- Fig. 10: ein Detail IX des in Fig. 9 gezeigten Dentalimplantates;
- Fig. 11: eine schematische Querschnittsansicht entlang einer Längsachse des in Fig. 9 und 10 gezeigten Dentalimplantates in einem Vormontagezustand;
- Fig. 12: ein Detail XI des in Figs. 9 bis 11 gezeigten Dentalimplantates; und
- Fig. 13: eine schematische Querschnittsansicht entlang der Längsachse des in Figs. 9 bis 12 gezeigten Dentalimplantates in einem Endmontagezustand.

### Ausführung der Erfindung

Im Folgenden ist die Erfindung beispielhaft anhand möglicher Ausführungsformen mit Bezug auf die beigefügten Zeichnungen genauer beschrieben. Die bei diesen Ausführungsformen dargestellten Merkmalskombinationen dienen lediglich Anschauungszwecken. Einzelne Merkmale können nach Massgabe ihrer oben beschriebenen Vorteile auch weggelassen werden, wenn es bei bestimmten Anwendungen auf den Vorteil des jeweiligen Merkmals nicht ankommt. In der Beschreibung der Ausführungsformen sind der Einfachheit halber gleiche Merkmale und Elemente mit gleichen Bezugszeichen versehen. Bei unterschiedlichen Ausführungsformen können Merkmale und Elemente mit gleicher oder ähnlicher Funktion mit einem oder mehreren Apostrophen versehen sein, um sie darstellungshalber einer Ausführungsform zuzuordnen, wobei diese Zuordnung nicht als auf die jeweilige Ausführungsform einschränkend aufzufassen ist.

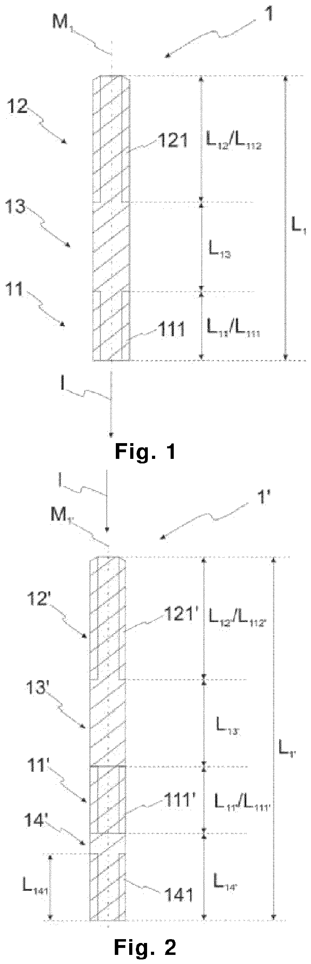

Figur 1 zeigt eine Schnittdarstellung einer ersten Ausführungsform eines erfindungsgemässen Einheitsverbinders 1. Der Einheitsverbinder 1 weist einen Basisabschnitt 11 mit einem ersten Aussengewinde 111 sowie einen Abutmenthalteabschnitt 12 mit einem Haltegewinde 121 auf. Zwischen den Abschnitten 11, 12 weist der Einheitsverbinder einen zylindrischen Schaftabschnitt 13 auf, so dass der Einheitsverbinder 1 die Form eines Stehbolzens mit einer Mittelachse M₁ aufweist, entlang welcher der Einheitsverbinders 1 in einer Einsetzrichtung I einzusetzen bzw. einzuschrauben ist.

Der Einheitsverbinder 1 besitzt eine parallel zur Einsetzrichtung I gemessene Gesamtlänge L₁. Der Basisabschnitt 11 und das Aussengewinde 111 besitzen eine parallel zur Einsetzrichtung I gemessene Länge L₁₁ bzw. L₁₁₁, die das 0.2 bis 0.3-fache, vorzugsweise das 0.25-fache entsprechend einem Viertel der Gesamtlänge L₁ betragen. Der Abutmenthalteabschnitt 12 und das Haltegewinde 121 besitzen eine parallel zur Einsetzrichtung I gemessene Länge L₁₂ bzw. L₁₁₂, die das 0.3 bis 0.6-fache, vorzugsweise das 0.4 bis 0.5-fache, höchst vorzugsweise das 0.416-fache entsprechend fünf Zwölftel der Gesamtlänge L₁ betragen. Der Schaftabschnitt 13 besitzt eine parallel zur Einsetzrichtung I gemessene Länge L₁₃, die das 0.3 bis 0.4-fache, vorzugsweise das 0.333-fache entsprechend einem Drittel der Gesamtlänge L₁ beträgt.

Der Einheitsverbinder 1 ist beispielsweise aus rostfreiem Stahl, Titan und/oder Keramik gefertigt. In bestimmten Ausführungsformen kann es besonders vorteilhaft sein, den Einheitsverbinder aus rostfreiem Stahl und/oder Titan zu fertigen, insbesondere wenn er innerhalb eines ansonsten keramischen Implantats hermetisch abgeschlossen von Kiefer und Zahnfleisch isoliert aufgenommen ist, so dass die Frage der Biokompatibilität für den Einheitsverbinder 1 selber von eher zweitrangiger Bedeutung und einer Optimierung seiner mechanischen Eigenschaften nachstehen kann.

Figur 2 zeigt eine Schnittdarstellung einer zweiten Ausführungsform eines Einheitsverbinders 1' mit einem Basisabschnitt 11' und einem ersten Aussengewinde 111' sowie einem Abutmenthalteabschnitt 12' und einem Haltegewinde 121'. An den Basisabschnitt 11' anschliessend ist eine Bolzenverlängerung 14' in geeigneter Weise angebracht. Beispielsweise kann die Bolzenverlängerung 14' mit dem Basisabschnitt 11' mittels einer Schraubverbindung in einer Ausnehmung an der Mittelachse des Basisabschnitts 11' oder mittels einer Klebeverbindung an dessen Stirnfläche verbunden sein. Die Bolzenverlängerung 14` weist ein Verlängerungsgewinde 141 auf, welche mit einem Innengewinde eines Basiskörpers eines Dentalimplantats in Eingriff bringbar ist. Mittels der Bolzenverlängerung 14' ist der Einheitsverbinder 1' verlängerbar und kann daher für lange Dentalimplantate verwendet werden. Alternativ oder zusätzlich kann die Bolzenverlängerung 14' in analoger Art und Weise auch am Abutmenthalteabschnitt 12' angebracht sein, um diesen zu verlängern.

Der Einheitsverbinder 1' besitzt ähnlich wie der Einheitsverbinder 1 eine parallel zur Einsetzrichtung I gemessene Gesamtlänge L_{1'}, die beispielsweise einer Summe der Gesamtlänge L₁ des Einheitsverbinders 1 zuzüglich einer parallel zur Einsetzrichtung I gemessenen Länge L_{14'} der Bolzenverlängerung 14' betragen kann. Der Basisabschnitt 11' und das Aussengewinde 111' besitzen eine parallel zur Einsetzrichtung I gemessene Länge L_{11'} bzw. L_{111'}, die ebenfalls das 0.2 bis 0.3-fache, vorzugsweise das 0.25-fache entsprechend einem Viertel der Gesamtlänge L₁ betragen. Der Abutmenthalteabschnitt 12' und das Haltegewinde 121' besitzen eine parallel zur Einsetzrichtung I gemessene Länge L_{12'} bzw. L_{112'}, die das 0.3 bis 0.6-fache, vorzugsweise das 0.4 bis 0.5-fache, höchst vorzugsweise das 0.416-fache entsprechend fünf Zwölftel der Gesamtlänge L₁ betragen. Der Schaftabschnitt 13' besitzt eine parallel zur Einsetzrichtung I gemessene Länge L_{13',} die das 0.3 bis 0.4-fache, vorzugsweise das 0.333-fache entsprechend einem Drittel der Gesamtlänge L₁ beträgt.

Mit Hilfe der Bolzenverlängerung 14' können die oben genannten vom Einheitsverbinder 1' abgeleiteten Längenverhältnisse zwischen den einzelnen Abschnitten des Einheitsverbinders 1' bezogen auf seine Gesamtlänge L_{1'} den jeweiligen Anforderungen gemäss verschoben bzw. angepasst sein. Die Verschiebung bzw. Anpassung der Längenverhältnisse ergibt sich aus der Länge L_{14'} der Bolzenverlängerung 14`, wobei die Gesamtlänge L₁ des Einheitsverbinders 1 eine Art Grundlänge darstellt, die mit Hilfe verschiedener Typen der Bolzenverlängerung 14' variiert werden kann.

Im vorliegenden Ausführungsbeispiel des Einheitsverbinders 1' mit Bolzenverlängerung 14' beträgt die Länge L_{14'} das 0.3 bis 0.4-fache, vorzugsweise das 0.333-fache entsprechend einem Drittel der Gesamtlänge L₁. Somit kann die Länge des Verlängerungsgewindes wiederum der Länge L_{111'} des Aussengewindes entsprechen. Der Einheitsverbinder 1 bzw. 1' kann somit durch Bolzenverlängerungen 14' jeweils inkrementell um das 0.3 bis 0.4-fache, vorzugsweise das 0.333-fache entsprechend einem Drittel der Gesamtlänge L₁ verlängert oder wahlweise verkürzt werden, wenn er ursprünglich mit wenigstens einer Bolzenverlängerung 14' versehen und durch ein Abnehmen der wenigstens einen Bolzenverlängerung 14' ablängbar ausgestaltet ist.

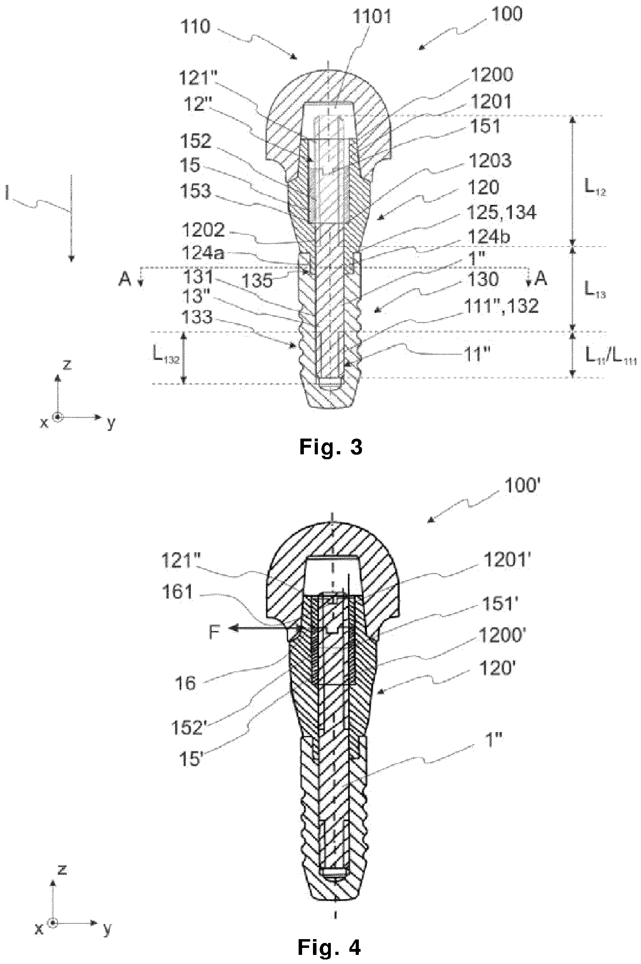

Figur 3 zeigt eine Schnittdarstellung eines Dentalimplantats 100 mit einer ersten Ausführungsform eines erfindungsgemässen Einheitsverbindungssystems. Das Dentalimplantat 100 umfasst einen Basiskörper 130, ein Abutment 120 und einen Zahnaufbau 110. Die Einsetzrichtung I des Dentalimplantats 100 ist mit einem Pfeil dargestellt. Der Basiskörper 130 und das Abutment 120 sind vorzugsweise aus einem Keramikmaterial gefertigt. Der Basiskörper 130 weist ein Aussengewinde 133 in Form eines Rundgewindes auf. Weiter weist der Basiskörper 130 eine Bohrung 131 in Form eines Sackloches auf, wobei die Bohrung 131 in der dem Abutment 120 abgewandten unteren Hälfte des Basiskörpers 130 ein Innengewinde 132 aufweist. Um die Angaben "oben" oder "unten" zu verdeutlichen, ist in der Figur das Koordinatensystem eingezeichnet. Das Innengewinde 132 ist mit einem ersten Aussengewinde 111" im Basisabschnitt 11" eines Einheitsverbinders 1", der in die Bohrung 131 eingeführt ist, in Eingriff gebracht.

Die Länge L₁₁₁ des ersten Aussengewindes 111" unterschreitet geringfügig eine parallel zur Einsetzrichtung I gemessene Länge L₁₃₂ des Innengewindes 132. Das Innengewinde 132 ist als Rundgewinde ausgebildet. Der Durchmesser der Bohrung 131 entspricht dem Durchmesser des Einheitsverbinders 1", sodass der Einheitsverbinder 1" beim Einsetzen in den Basiskörper 130 geführt wird. Das Abutment 120 weist eine Durchgangsbohrung 1200 mit oberem Bereich 1201 und unterem Bereich 1202 auf, wobei der Durchmesser der Durchgangsbohrung 1200 im oberen Bereich 1201 grösser als der Durchmesser der Durchgangsbohrung 1200 im unteren Bereich 1202 ist. Der obere Bereich 1201 grenzt an den unteren Bereich 1202 über eine Schulter 1203 an.

Der Durchmesser der Durchgangsbohrung 1200 im unteren Bereich 1202 entspricht dem Durchmesser des zylindrischen Schaftabschnitts des Einheitsverbinders 1", so dass das Abutment 120 beim Aufsetzen auf den Basiskörper 130 durch den zylindrischen Schaftabschnitt 13" des Einheitsverbinders 1" geführt wird. Die Länge L₁₃ des zylindrischen Schaftabschnitts 13" ist vorteilhafter Weise so bemessen, dass er sowohl das Abutment 120 als auch den Basiskörper optimal seitlich stützt und etwaige Quer und/oder Scherkräfte möglichst weit von Basisabschnitt 11" und Abutmenthalteabschnitt 12" entfernt aufnimmt sowie abgibt.

In die Durchgangsbohrung 1200 ist im oberen Bereich 1201 ein Halteelement 15 eingesetzt, welche mit dem Haltegewinde 121" im Abutmenthalteabschnitt 12" des Einheitsverbinders 1" in Eingriff gebracht ist, bzw. über ein Innengewinde 152 des Halteelements 15 aufgeschraubt ist. Der Abutmenthalteabschnitt 12" weist eine Länge L₁₂ auf. Das Halteelement 15 ist ebenfalls aus rostfreiem Stahl, Titan und/oder Keramik gefertigt. Der Aussendurchmesser des Halteelements 15 entspricht dem Durchmesser des oberen Bereichs 1201 der Durchgangsbohrung 1200 des Abutments 120, welche den Hülsenaufnahmebereich bildet, so dass das Abutment 120 bei auftretenden Querkräften an das Halteelement 15 anliegen kann, was die Stabilität des Dentalimplantats 100 erhöht. Zwischen der seitlichen Aussenfläche des Halteelements 15 und der seitlichen Innenfläche des oberen Bereichs 1201 der Durchgangsbohrung 1200 besteht ein Spalt, welcher ein Spiel sicherstellt. Das Halteelement 15 weist Eingriffsmittel 151 in Form von Kerben auf, welche mit einem geeigneten Schlüssel (nicht gezeigt) in Eingriff gebracht werden können.

Mit dem geeigneten Werkzeug bzw. Schlüssel kann das Halteelement 15 mittels der Eingriffsmittel 151 auf den Abutmenthalteabschnitt 121" des Einheitsverbinders 1" aufgeschraubt werden. Das Halteelement 15 weist ein Innengewinde 152 auf, welche mit dem Haltegewinde 121" des Einheitsverbinders 1" in Eingriff gebracht ist. Durch das Aufschrauben des Halteelements 15 wird eine Wirkverbindung zwischen dem Einheitsverbinder 1" und dem Abutment 120 derart hergestellt, dass das Abutment 120 durch das Halteelement 15 über die Schulter 1203 auf den Basiskörper 130 gepresst wird und so eine abgedichtete formschlüssige Verbindung zwischen dem Abutment 120 und dem Basiskörper 130 hergestellt wird. Beim Aufschrauben des Halteelements 15 liegt dabei die Kontaktfläche 125 des Abutments 120 auf der Kontaktfläche 134 des Basiskörpers 130 an.

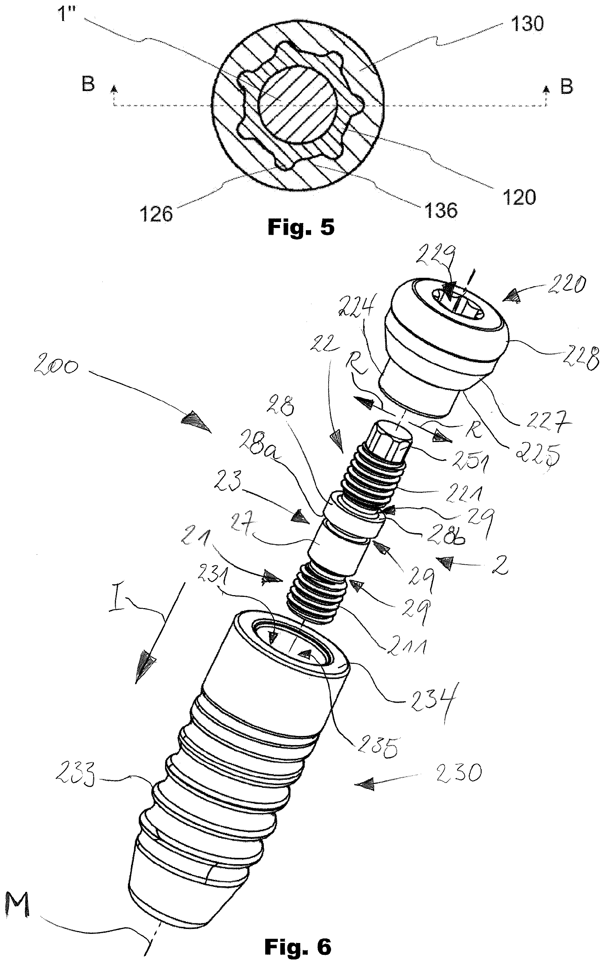

Das Abutment 120 weist weiter einen Fortsatz 124 a,b auf, welcher in eine formpassende Aufnahme 135 in Form einer Vertiefung des Basiskörpers 130 aufgenommen ist. Der Fortsatz 124 a,b ist in radialer Richtung asymmetrisch ausgebildet, so dass ein verdrehsicherer Formschluss sichergestellt wird. In Querschnitt (in y-Richtung) weist der Fortsatz 124 a,b Vorsprünge auf, welche in Fig. 5 im Querschnitt gezeigt sind. In der Figur 3 oder 4 ist zu sehen, dass der Abutmenthalteabschnitt 12" des Einheitsverbinders 1" über das Abutment 120 hinausragt. Vor dem Aufsetzen des Zahnaufbaus 110 kann der Einheitsverbinder 1" bei Bedarf im Abutmenthalteabschnitt 12" abgelängt werden, falls der Überstand zu gross sein sollte. Alternativ oder in Ergänzung kann eine Ausnehmung 1101 im Zahnaufbau 110, wie in der Figur gezeigt, genutzt werden, welche den Überstand des Abutmenthalteabschnitts 12" aufnimmt.

Figur 4 zeigt eine zweite Ausführungsform eines erfindungsgemässen Dentalimplantats 100`. Im Unterschied zum in Figur 3 gezeigten Dentalimplantat 100 besitzt das Dentalimplantat 100` ein Abutment 120`, dessen parallel zur Einsetzrichtung I gemessene Länge grösser ist als die parallel zur Einsetzrichtung I gemessene Länge des Abutments 120. Dementsprechend ragt ein oberes Ende eines Einheitsverbinders 1" des Dentalimplantats 100` weniger aus der Durchgangsbohrung 1200' heraus über dem oberen Rand des Abutments 120' hervor als beim Dentalimplantat 100.

Das Dentalimplantat 100` ist mit einem Zusatzhalteelement 16 versehen. Das Zusatzhalteelement 16 ist an das Halteelement 15' anliegend auf das Haltegewinde 121" des Einheitsverbinders 1" aufgeschraubt. Das Zusatzhalteelement 16 weist ein Innengewinde auf, welche mit dem Haltegewinde 121" des Einheitsverbinders 1" in Eingriff gebracht ist. Das Zusatzhalteelement 16 weist Eingriffsmittel 161 auf, mittels welchen das Zusatzhalteelement 16 auf das Haltegewinde 121" aufgeschraubt werden kann.

Das Zusatzhalteelement 16 erhöht die Stabilität des Dentalimplantats 100', da die Fläche, über welche das Abutment 120' abgestützt werden kann, erhöht wird. Die Länge des Halteelements 15' und die Länge des Zusatzhalteelements 16 entspricht fast der Länge des oberen Bereichs 1201' der Durchgangsbohrung 1200'. Somit kann das Abutment 120' bei auf das Zahnimplantat 100` einwirkenden Querkräften sowohl am vorzugsweise hülsenförmigen Halteelement 15' als auch am ebenfalls vorzugsweise hülsenförmigen Zusatzhalteelement 16 seitlich anliegen.

Illustrativ ist in der Figur 4 der Doppelpfeil F gezeigt, welcher auftretende Querkräfte darstellen soll. Die Kräfte F können zu Drehmomenten führen, welche ohne Halteelemente oder mit kurzen Halteelementen im Wesentlichen auf den unteren Bereich der Durchgangsbohrung 1200' des Abutments 120' konzentriert sein würden. Lange Halteelemente 15' oder Zusatzhalteelemente 16 ermöglichen bei Querkräften F ein seitliches Abstützen des Abutments 120', so dass die auftretenden Drehmomente im Wesentlichen entlang der gesamten Länge der Durchgangsbohrung 1200' verteilt und aufgenommen werden können.

Figur 5 zeigt das in der Figur 3 gezeigte Dentalimplantat 100 in einer schematischen Querschnittsansicht entlang der in Figur 3 eingezeichneten Schnittlinie A-A in einem Bereich, in welchem der Fortsatz 124 a, b in die Aufnahme 135 eingreift. Am Fortsatz 124 a, b aussen sind sich radial vom Fortsatz 124 a, b weg erstreckende vorsprungartige Positivelemente 126 ausgeformt, die parallel zur Einsetzrichtung I verlaufen. Die Aufnahme 135 ist mit ebenfalls parallel zur Einsetzrichtung I verlaufenen Negativelementen 136 versehen, die komplementär zu den Positivelementen 126 ausgestaltet sind.

Die Positivelemente 126 wirken derart formschlüssig mit den Negativelementen 136 zusammen, dass im zusammengesetzten Zustand Relativbewegungen, insbesondere Drehbewegungen, des Abutments 120 gegenüber dem Basiskörper 130 unterbunden sind. Zugleich definieren Positivelemente 126 und Negativelemente 136 gemeinsam ein kreisförmiges Raster von Drehpositionen, entlang denen eine Rotationsausrichtung von Abutment 120 und Basiskörper 130 vor dem Zusammensetzen relativ zueinander in inkrementellen Schritten frei gewählt werden kann.

Entsprechend der Beschaffenheit der Haltegewinde 121, 121' als solche sowie durch Ihre variable Positionierbarkeit entlang der Einsetzrichtung I dank der beschriebenen Verlänger- und/oder Verkürzbarkeit stellen erfindungsgemässe Einheitsverbinder 1, 1'eine Vielzahl von entlang der Einsetzrichtung I voneinander beabstandeten Haltepositionen für das Abutment 120, 120' bereit.

Fig. 6 zeigt eine schematische Explosionsdarstellung einer weiteren Ausführungsform eines erfindungsgemässen Dentalimplantats 200. Das Dentalimplantat 200 umfasst einen vorzugsweise aus einem Metall oder einer Metalllegierung, wie beispielsweise Titan oder einer Titanlegierung gefertigten Verbinder 2, eine vorzugsweise aus Keramik, wie beispielsweise Zirkoniumoxid gefertigte Prothetik 220, hier beispielsweise in Form eines Kopfes einer Einheilschraube, und einen vorzugsweise ebenfalls aus Keramik, wie beispielsweise Zirkoniumoxid, gefertigten Basiskörper 230. Verbinder 2, Prothetik 220 und Basiskörper 230 sind konzentrisch zu einer parallel zur Einsetzrichtung I verlaufenden Mittelachse M des Dentalimplantats 200 angeordnet.

Der Verbinder 2 besitzt einen Basisabschnitt 21, einen Halteabschnitt 22 und einen Schaftabschnitt 23. Am Basisabschnitt 21 ist ein Basisgewinde 211 ausgeformt, das dazu ausgestaltet ist, in Einsetzrichtung I in den Basiskörper 230 eingeschraubt zu werden. Um den Halteabschnitt 22 ist wie beim Abutmenthalteabschnitt 12, 12', 12" ein Haltegewinde 221 ausgeformt (s. Figuren 1 bis 3). Das Haltegewinde 221 ist dazu ausgestaltet, entgegen der Einsetzrichtung I in die Prothetik 220 eingeschraubt zu werden sowie mit dem Halteelement 15, 15' zusammenzuwirken (s. Figuren. 3 und 4). Der Schaftabschnitt 23 ist zylinderförmig ausgestaltet sowie rotationssymmetrisch zur Mittelachse angeordnet und bietet durch seine zylindrische Aussenumfangsfläche eine Stützfläche 27, die in eine radial von der Mittelachse M weg verlaufenden radialen Richtung R des Verbinders 2 weist.

Ein Ringbund 28 des Verbinders 2 ist ebenfalls zylinderförmig ausgestaltet und zwischen dem Halteabschnitt 22 und dem Schaftabschnitt 23 liegend rotationssymmetrisch zur Mittelachse M angeordnet. Ein parallel zur radialen Richtung R gemessener Durchmesser des Ringbundes 28 ist grösser als ein ebenfalls parallel zur radialen Richtung R gemessener Durchmesser des Schaftabschnittes 23. Somit überragt der Ringbund 28 den Schaftabschnitt 23 in radialer Richtung R und bildet ein in Einsetzrichtung I weisendes Schulterelement 28a und ein entgegen der Einsetzrichtung I weisendes Schulterelement 28b.

Des Weiteren ist der Verbinder 2 mit Ringnuten 29 versehen, die jeweils zwischen Basisabschnitt 21 bzw. Basisgewinde 211 und Schaftabschnitt 23, zwischen Schaftabschnitt 23 und Ringbund 28 sowie zwischen Ringbund 28 und Halteabschnitt 22 bzw. Haltegewinde 221 angeordnet sind. An den Ringnuten 29 ist der Verbinder 2 verjüngt bzw. eingeschnürt, sodass ein parallel zur radialen Richtung R gemessener Durchmesser des Verbinders 2 wenigstens am Boden der Ringnuten 29 kleiner ist als der entsprechende Durchmesser der jeweils an die Ringnuten 29 angrenzenden Abschnitte des Verbinders 2.

Ferner ist ein oberer, vom Halteabschnitt 22 entgegen der Einsetzrichtung I Weg verlaufender Endabschnitt des Verbinders 2 als Eingriffsmittel 251 ausgeformt, an dem mit einem Werkzeug (nicht gezeigt) ein um die Mittelachse M wirkendes Drehmoment auf den Verbinder 2 übertragen werden kann. Ein parallel zur radialen Richtung R gemessener Durchmesser des Eingriffsmittels 251 ist kleiner als eine in radialer Richtung R gemessener Durchmesser des Haltegewindes 221. Im vorliegenden Beispiel weist das Eingriffsmittel 251 an seinem äusseren Umfang eine Aussenkontur auf, die im vorliegenden Ausführungsbeispiel als Sechskant ausgestaltet ist.

Die Prothetik 220 ist beispielsweise rotationssymmetrisch zur Mittelachse M ausgestaltet und besitzt einen Fortsatz 224, eine Kontaktfläche 225, einen kegelstumpfförmigen Übergangsabschnitt 227, einen Kopfteil 228 und ein Eingriffselement 229. Alternativ kann die Prothetik 220 auch asymmetrisch zur Mittelachse M ausgestaltet sein. Der Fortsatz besitzt einen parallel zur radialen Richtung R gemessenen Durchmesser, der kleiner als der ebenfalls parallel zur radialen Richtung R gemessene Durchmesser des Übergangsabschnittes 227, wodurch zwischen Fortsatz 224 und Übergangsabschnitt 227 die in Einsetzrichtung I weisende Kontaktfläche 225 ausgebildet ist. Das im Kopfteil 228 ausgeformte Eingriffselement 229 ist beispielsweise als Innensechskant oder wie vorliegend als Innensechsrund ausgestaltet und erlaubt, mit Hilfe eines Werkzeugs (nicht gezeigt) ein um die Mittelachse M wirkendes Drehmoment auf die Prothetik 220 zu übertragen.

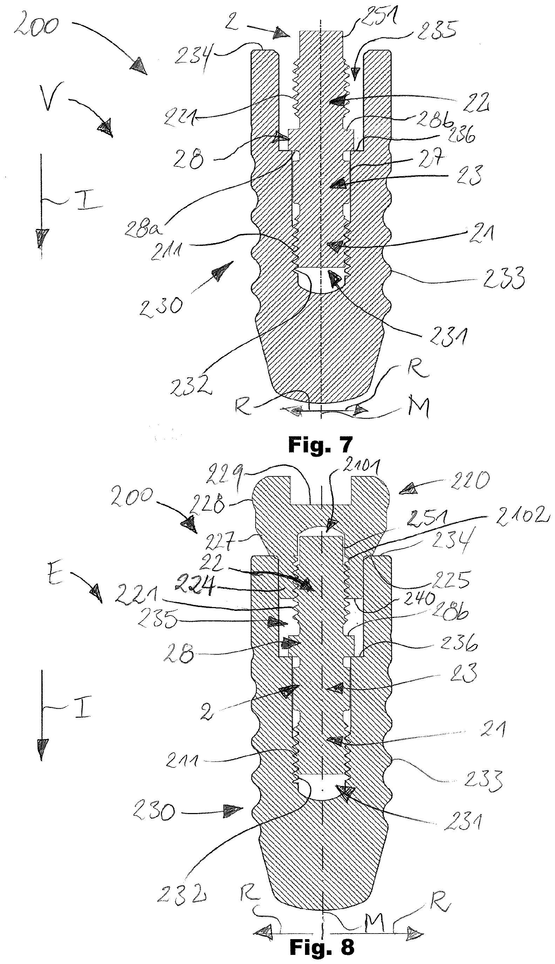

Der Basiskörper 230 besitzt wie der Basiskörper 130 eine Bohrung 231, in der ein Innengewinde 232 (s. Fig. 7) ausgeformt ist. Aussenumfangsseitig ist der Basiskörper 230 wie der Basiskörper 130 mit einem Aussengewinde 233 versehen. Ebenfalls ist am Basiskörper 230 wie am Basiskörper 130 eine entgegen der Einsetzrichtung I weisende Kontaktfläche 234 ausgeformt, welche die Bohrung 231 bzw. deren Öffnung umgibt. Ein oberer Teil der Bohrung 231 dient als Aufnahme 235 für den Fortsatz 224 der Prothetik 220.

Fig. 7 zeigt eine schematische Querschnittsansicht entlang der Mittelachse M des Dentalimplantates 200 in einem Vormontagezustand V. Im Vormontagezustand V ist der Verbinder 2 in den Basiskörper 230 eingesetzt, wobei der Basisabschnitt 21 mit dem Basisgewinde 211 in einem unteren Bereich der Bohrung 231 angeordnet ist, wo in dieser das Innengewinde 232 ausgeformt ist. Oberhalb des Innengewindes 232 des Basiskörpers 230 ist der Schaftabschnitt 23 des Verbinders 2 angeordnet. Zwischen der Stützfläche 27 des Schaftabschnitts 23 und dem Innenumfang des den Schaftabschnitt 23 umgebenden Teils der Bohrung 231 befindet sich ein möglichst geringes bis vorzugsweise kaum oder kein Spiel, beispielsweise indem Schaftabschnitt 23 und Bohrung 231 in diesem Bereich mit einer Spielpassung oder Übergangspassung ausgelegt sind. Somit stützt der Schaftabschnitt 23 den Verbinder 2 in der Bohrung 231 oberhalb des Innengewindes 232 vorzugsweise ringsherum ab, was dabei hilft, in radialer Richtung R wirkende Querkräfte sowie Biegemomente vom Innengewinde 232 fernzuhalten, sodass dort im Wesentlichen lediglich in Richtung der Mittelachse M wirkende Normalkräfte auftreten.

Der Ringbund 28 bzw. das von ihm bereitgestellte Schulterelement 28a liegt auf einem Gegenschulterelement 236 auf, das in der Bohrung 231 ausgeformt ist. Das Gegenschulterelement 236 ist zwischen dem unteren Teil der Bohrung 231 und der Aufnahme 235 gebildet und begrenzt die Aufnahme 235 in Einsetzrichtung I. Mit anderen Worten ist ein parallel zur radialen Richtung R gemessener Durchmesser des unteren Teils der Bohrung 231 kleiner als ein parallel zur radialen Richtung R gemessener Durchmesser der Aufnahme 235. Der Halteabschnitt 22 mit dem Haltegewinde 221 ist vollständig innerhalb der Aufnahme 235 angeordnet. Das Eingriffsmittel 251 ragt entgegen der Einsetzrichtung I über die Kontaktfläche 234 hinweg aus der Aufnahme 235 hinaus und steht somit vom Dentalimplantat 200 im Vormontagezustand V vor, sodass das Eingriffsmittel 251 für ein Werkzeug einfach zugänglich angeordnet ist.

Fig. 8 zeigt eine schematische Querschnittsansicht entlang der Mittelachse des Dentalimplantates 200 in einem Endmontagezustand E. Das Dentalimplantat 200 ist vom Vormontagezustand V in den Endmontagezustand E zu überführen, indem die Prothetik 220 in Einsetzrichtung I auf den Verbinder 2 geschraubt wird. Dazu ist die Prothetik 220 analog zur Bohrung 231 des Basiskörpers 230 mit einer konzentrisch zur Mittelachse M angeordneten sacklochartigen Ausnehmung 2101. In einem unteren Teil der Ausnehmung 2101, der sich im Wesentlichen in Einsetzrichtung I entlang des Fortsatzes 224 erstreckt, ist die Ausnehmung 2101 mit einem Gegenhaltegewinde 2102 versehen, das sich im Eingriff mit dem Haltegewinde 221 befindet. Das Eingriffsmittel 251 ist unter einem gewissen radialen Spiel gegenüber der Ausnehmung 2101 in der Ausnehmung 2101 aufgenommen und darin vom Kopfteil 228 umschlossen.

Im Endmontagezustand E liegt die Kontaktfläche 225 der Prothetik 2 auf der Kontaktfläche 234 des Basiskörpers 230 bündig abdichtend auf. Folglich ist die Aufnahme 235 hermetisch abgedichtet. Somit kann sichergestellt werden, dass der Verbinder 2 nicht in Kontakt mit dem Zahnfleisch gelangt bzw. vom gesamten Mundraum abgeschirmt ist. Der Fortsatz 224 ragt in Einsetzrichtung I in die Aufnahme 235, wobei zwischen einem Aussenumfang des Fortsatzes 224 und einem Innenumfang der Aufnahme 235 vorzugsweise ein möglichst geringes bis vorzugsweise kaum oder kein Spiel vorhanden ist, beispielsweise indem Fortsatz 224 und Aufnahme 235 in diesem Bereich mit einer Spielpassung oder Übergangspassung ausgelegt sind. In radialer Richtung R überdecken sich eine die Aufnahme 235 bildende Wandung des Basiskörpers 230 mit Prothetik 220 und Verbinder 2, wodurch sie einen kompakte und hochstabile Baugruppe bilden. Eine in Einsetzrichtung I weisende Stirnseite 240 am Fortsatz der Prothetik 220 ist am Fortsatz 224 gebildet und von dem Schulterelement 28b in Einsetzrichtung I beabstandet angeordnet.

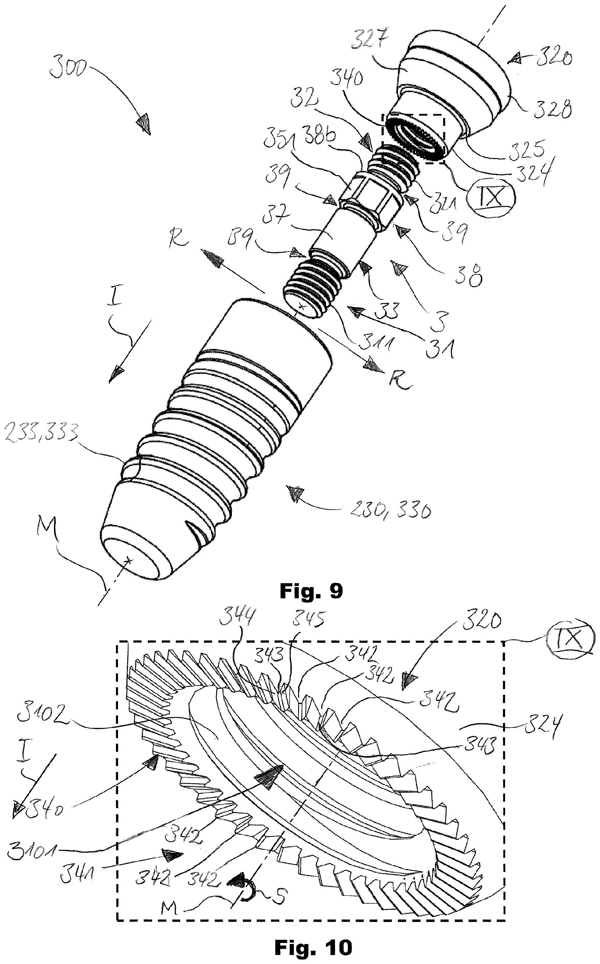

Fig. 9 zeigt eine schematische Explosionsdarstellung einer zusätzlichen Ausführungsform eines erfindungsgemässen Dentalimplantats 300. Das Dentalimplantat 300 umfasst wie das Dentalimplantat 200 einen vorzugsweise aus einem Metall oder einer Metalllegierung, wie beispielsweise Titan oder einer Titanlegierung, gefertigten Verbinder 3, eine vorzugsweise aus Keramik, wie beispielsweise Zirkoniumoxid gefertigte Prothetik 320, auch hier beispielsweise in Form eines Kopfes einer Einheilschraube, und einen vorzugsweise ebenfalls aus Keramik, wie beispielsweise Zirkoniumoxid, gefertigten Basiskörper 330, der im vorliegenden Beispiel identisch zum Basiskörper 230 ausgeformt ist. Verbinder 3, Prothetik 320 und Basiskörper 330 sind konzentrisch zu Mittelachse M des Dentalimplantats 300 angeordnet. Im Folgenden wird der Kürze halber hauptsächlich auf die Unterschiede zwischen dem Dentalimplantat 300 und dem Dentalimplantat 200 eingegangen.

Der Verbinder 3 besitzt einen Basisabschnitt 31, einen Halteabschnitt 32 und einen Schaftabschnitt 33. Am Basisabschnitt 31 ist ein Basisgewinde 311 ausgeformt, das dazu ausgestaltet ist, in Einsetzrichtung I in den Basiskörper 330 eingeschraubt zu werden. Am Halteabschnitt 32 ist wie beim Abutmenthalteabschnitt 12, 12', 12", 22 ein Haltegewinde 321 ausgeformt. Das Haltegewinde 321 ist dazu ausgestaltet, entgegen der Einsetzrichtung I in die Prothetik 320 eingeschraubt zu werden sowie mit dem Halteelement 15, 15' zusammenzuwirken (s. Figuren. 3 und 4). Der Schaftabschnitt 33 ist zylinderförmig ausgestaltet sowie rotationssymmetrisch zur Mittelachse M angeordnet und bietet somit durch seine zylindrische Aussenumfangsfläche eine Stützfläche 37.

Ein Ringbund 38 des Verbinders 3 ist zwischen dem Halteabschnitt 32 und dem Schaftabschnitt 33 liegend rotationssymmetrisch zur Mittelachse M angeordnet und zumindest abschnittsweise als Eingriffsmittel 351 ausgeformt. Das Eingriffsmittel 351 besitzt ähnlich wie das Eingriffsmittel 251 des Verbinders 2 eine Außenkontur, die dazu ausgestaltet ist, mit einem Werkzeug zusammen zu wirken, um mit Hilfe des Werkzeugs ein Drehmoment auf den Verbinder 3 zu übertragen. Vorzugsweise ist das Eingriffsmittel 351 als Aussensechskant ausgestaltet. Ein parallel zur radialen Richtung R gemessener Durchmesser von Ringbund 38 samt Eingriffsmittel 351 ist größer als ein ebenfalls parallel zur radialen Richtung R gemessener Durchmesser des Schaftabschnittes 33. Somit überragt der Ringbund 38 den Schaftabschnitt 33 und bietet daher ein entgegen der Einsetzrichtung I weisendes Schulterelement 38b.

Des Weiteren ist der Verbinder 3 mit Ringnuten 39 versehen, die jeweils zwischen Basisabschnitt 31 bzw. Basisgewinde 311 und Schaftabschnitt 33, zwischen Schaftabschnitt 33 und Ringbund 38 sowie zwischen Ringbund 38 und Halteabschnitt 32 bzw. Haltegewinde 321 angeordnet sind. An den Ringnuten 39 ist der Verbinder 3 verjüngt bzw. eingeschnürt, sodass ein parallel zur radialen Richtung R gemessener Durchmesser des Verbinders 3 am Boden der Ringnuten 39 kleiner ist als ein Durchmesser jeweils an die Ringnuten 39 angrenzender Abschnitte des Verbinders 3.

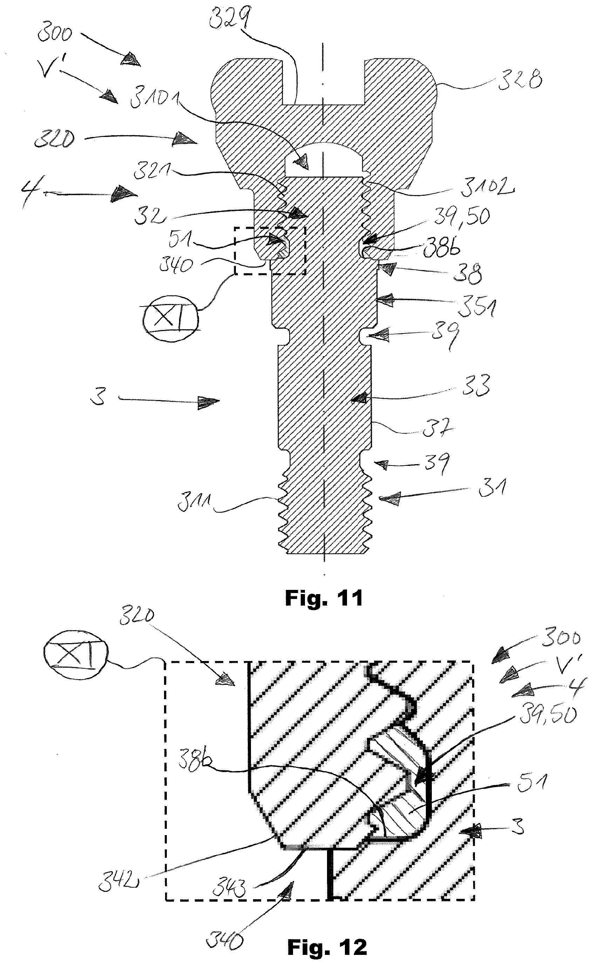

Die Prothetik 320 ist rotationssymmetrisch zur Mittelachse M ausgestaltet und besitzt ähnlich wie die Prothetik 220 einen Fortsatz 324, eine Kontaktfläche 325, einen kegelstumpfförmigen Übergangsabschnitt 327, einen Kopfteil 328 und ein Eingriffselement 329 (siehe Fig. 11). Der Fortsatz 324 besitzt einen parallel zur radialen Richtung R gemessenen Durchmesser, der kleiner als der ebenfalls parallel zur radialen Richtung R gemessene Durchmesser des Übergangsabschnittes 327 ist, wodurch zwischen Fortsatz 324 und Übergangsabschnitt 327 die in Einsetzrichtung Iweisende Kontaktfläche 325 ausgebildet ist. Das im Kopfteil 328 ausgeformte Eingriffselement 329 ist beispielsweise als Innensechskant oder wie vorliegend als Innensechsrund ausgestaltet und erlaubt, mit Hilfe eines Werkzeugs (nicht gezeigt) ein um die Mittelachse M wirkendes Drehmoment auf die Prothetik 320 zu übertragen. Im Unterschied zur Prothetik 220 besitzt die Prothetik 330 eine spezielle ausgeformte Stirnseite 340, auf die weiter unten im Detail eingegangen wird.

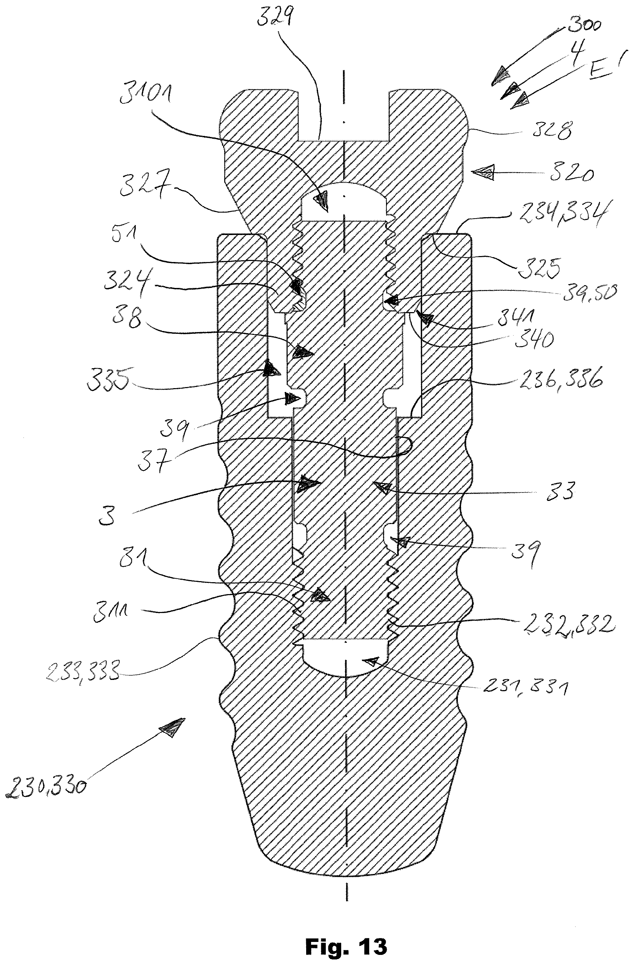

Der Basiskörper 330 besitzt wie die Basiskörper 130 und 230 eine Bohrung 331, in der ein Innengewinde 332 (s. Fig. 13) ausgeformt ist. Aussenumfangsseitig ist der Basiskörper 330 wie die Basiskörper 130 und 230 mit einem Aussengewinde 333 versehen. Ebenfalls ist am Basiskörper 330 wie an den Basiskörpern 130 und 230 eine entgegen der Einsetzrichtung I weisende Kontaktfläche 334 ausgeformt, welche die Bohrung 331 umgibt. Ein oberer Teil der Bohrung 331 dient als Aufnahme 335 für den Fortsatz 324 der Prothetik 320 (s. Fig. 13).

Fig. 10 zeigt ein Detail IX des in Fig. 9 gezeigten Dentalimplantats 300, insbesondere die Stirnseite 340 der Prothetik 320. Die Stirnseite 340 bildet einen ringförmigen Rand um eine Ausnehmung 3101 der Prothetik 320, die ähnlich wie die Ausnehmung 2101 der Prothetik 220 ausgebildet und mit einem Gegenhaltegewinde 3102 versehen ist. An der Stirnseite 340 ist eine Verzahnung 341 ausgeformt. Die Verzahnung 341 ist aus einer Vielzahl von Zähnen 342 gebildet, welche die Ausnehmung 3101 kranzartig umgeben.

Die Zähne 342 ragen ähnlich wie bei einer sogenannten Hirth-Verzahnung in Einsetzrichtung I von der Stirnseite 340 vor. Zahnspitzen 343 der Zähne 342 bilden im Wesentlichen parallel zur radialen Richtung R verlaufende Kanten aus. Die Zähne 342 sind entgegen einer in einer Projektion entlang der Einsetzrichtung I im Uhrzeigersinn um die Mittelachse herum verlaufende Schraubrichtung S der Prothetik 320 geneigt. Durch die Neigung weisen die Zähne 342 jeweils eine in Schraubrichtung S weisende flache Zahnflanke 344 und eine entgegen der Schraubrichtung S weisende steile Zahnflanke 345 auf.

Fig. 11 zeigt eine schematische Querschnittsansicht entlang einer Mittelachse M des in Fig. 9 und 10 gezeigten Dentalimplantates 300 in einem weiteren Vormontagezustand V'. Im weiteren Vormontagezustand V' ist die Prothetik 320 mit dem in ihrer Ausnehmung 3101 ausgeformten Gegenhaltegewinde 3102 in Einsetzrichtung I auf das Haltegewinde 321 des Halteabschnitts 32 des Verbinders 3 geschraubt. Die Stirnseite 340 der Prothetik 320 ist in Kontakt mit dem Schulterelement 38b gebracht. Im Bereich der zwischen dem Haltebereich 32 und dem Ringbund 38 angeordneten Ringnut 39 ist eine Kavität 50 gebildet. Die Kavität 50 kann zum Beispiel mindestens teilweise mit einem Klebstoff 51 gefüllt sein.

Fig. 12 zeigt ein Detail XI des in Figs. 9 bis 11 gezeigten Dentalimplantates 300. Hier wird deutlich, dass die Zähne 342 beim Aufschrauben der Prothetik 320 auf den Verbinder 3 dessen Material verdrängt haben und somit ein Formschluss zwischen Prothetik 320 und Verbinder 3 herbeigeführt ist. Durch die Neigung der Zähne 342 entgegen der Schraubrichtung S ist dieser Formschluss insbesondere bei entgegen der Schraubrichtung S auf die Prothetik 320 relativ zum Verbinder 3 wirkenden Drehmomente um die Mittelachse M wirksam, sodass eine innige Verbindung zwischen Prothetik 320 und Verbinder 3 besteht.

Die flachen Zahnflanken 344 begünstigen eine Relativbewegung zwischen Prothetik 320 und Verbinder 3 beim Aufschrauben der Prothetik 320, wenn die Stirnseite 340 auf das Schulterelement 38b trifft. Die steilen Zahnflanken 345, die beispielsweise im Wesentlichen parallel zur Einsetzrichtung I verlaufen oder sogar einen Hinterschnitt aufweisen können, verhindern hingegen ein Lösen der Verschraubung zwischen Prothetik 320 und Verbinder 3, indem sie sich beim Versuch, die Prothetik 320 entgegen der Schraubrichtung S relativ zum Verbinder 3 zu drehen in dessen Material graben und somit die Relativdrehung hemmen oder bestenfalls Prothetik 320 und Verbinder 3 gegeneinander sperren.

Der Klebstoff 51 begünstigt eine innige Verbindung zwischen Prothetik 320 und Verbinder 3 und kann beispielsweise auf Haltegewinde 321 und/oder Gegenhaltegewinde 3102 aufgetragen und/oder, wie gezeigt, in der Kavität 50 angeordnet sein. Verzahnung 341 und/oder Klebstoff 51 können also erfindungsgemäß dazu genutzt werden, um die Prothetik 320 hochfest bzw. möglichst unlösbar mit dem Verbinder 3 zu verbinden. Verzahnung 341 und/oder Klebstoff 51 helfen somit, eine hybride Implantatschraube 4 zu bilden, die wenigstens eine metallische Komponente, wie den Verbinder 3, und wenigstens eine keramische Komponente, wie die Prothetik 320 umfasst.

Fig. 13 zeigt eine schematische Querschnittsansicht entlang der Längsachse des in Figs. 9 bis 12 gezeigten Dentalimplantates in einem weiteren Endmontagezustand E'. Im Endmontagezustand E' sind Verbinder 3 und Prothetik 320 gemeinsam bzw. als hybride Implantatschraube 4 in den Basiskörper 330 eingesetzt. Zum Einsetzen ist der Basisabschnitt 31 mit dem Basisgewinde 311 des Verbinders 3 bzw. der hybriden Implantatschraube 4 unter Verwendung des Eingriffselements 329 der Prothetik zum Ansetzen eines Werkzeugs (nicht gezeigt) in das Innengewinde 332 des Basiskörpers 330 eingeschraubt. Der Schaftabschnitt 33 des Verbinders 3 bzw. der hybriden Implantatschraube 4 ist in einem oberhalb des Innengewindes 332 angeordneten Abschnitt der Bohrung 331 aufgenommen.

Zwischen der Stützfläche 37 des Schaftabschnitts 33 und dem Innenumfang der Bohrung 331 befindet sich ein möglichst geringes bis vorzugsweise kaum oder kein Spiel, beispielsweise indem Schaftabschnitt 33 und Bohrung 331 in diesem Bereich mit einer Spielpassung oder Übergangspassung ausgelegt sind. Somit stützt der Schaftabschnitt 33 den Verbinder 3 in der Bohrung 331 oberhalb des Innengewindes 332 ab, was dabei hilft, in radialer Richtung R wirkende Querkräfte sowie Biegemomente vom Innengewinde 332 fernzuhalten, sodass dort im Wesentlichen lediglich in Richtung entlang der Mittelachse M wirkende Normalkräfte auftreten.

Im Endmontagezustand E' liegt die Kontaktfläche 325 der Prothetik 320 auf der Kontaktfläche 334 des Basiskörpers 330 bündig abdichtend auf, wodurch die Aufnahme 335 hermetisch abgedichtet ist. Somit kann sichergestellt werden, dass der Verbinder 3 nicht in Kontakt mit dem Zahnfleisch gelangt bzw. vom gesamten Mundraum abgeschirmt ist. Der Fortsatz 324 ragt in Einsetzrichtung I in die Aufnahme 335, wobei zwischen einem Außenumfang des Fortsatzes 324 und einem Innenumfang der Aufnahme 335 vorzugsweise ein möglichst geringes bis vorzugsweise kaum oder kein Spiel vorhanden ist, beispielsweise indem Fortsatz 324 und Aufnahme 335 in diesem Bereich mit einer Spielpassung oder Übergangspassung ausgelegt sind. In radialer Richtung R überdecken sich eine die Aufnahme 335 bildende Wandung des Basiskörpers 330 mit Prothetik 320 und Verbinder 3, wodurch sie einen kompakte und hochstabile Baugruppe bilden. Durch die Verwendung von Prothetik 320 und Verbinder 3 als hybride Implantatschraube 4 ist das Dentalimplantat 300 wie ein zweiteiliges Dentalimplantat handhabbar.

### Bezugszeichenliste

- 1, 1', 1", 2, 3: Einheitsverbinder oder Verbinder
- 4: hybride Implantatschraube
- 11, 11', 11", 21, 31: Basisabschnitt
- 111, 111', 111", 211, 311: Basisgewinde / unteres Aussengewinde
- 12, 12', 12", 22, 32: Abutmenthalteabschnitt/Halteabschnitt
- 121, 121', 121", 221, 321: Haltegewinde / oberes Aussengewinde)
- 13, 13', 13", 23, 33: Schaftabschnitt
- 14`: Bolzenverlängerung
- 141: Verlängerungsgewinde
- 100, 100', 200, 300: Dentalimplantat
- 110: Zahnaufbau
- 1101, 2101, 3101: Ausnehmung
- 2102, 3102: Gegenhaltegewinde
- 120, 120', 220, 320: Abutment / Prothetik
- 1200, 1200': Durchgangsbohrung
- 1201, 1201': oberer Bereich der Durchgangsbohrung
- 1202: unterer Bereich der Durchgangsbohrung
- 1203: Schulter
- 124a, b, 224: Fortsatz
- 125, 225: Kontaktfläche
- 126: Positivelement
- 130, 230, 330: Basiskörper
- 131,231,331: Bohrung
- 132, 232, 332: Innengewinde
- 133, 233, 333: Aussengewinde
- 134, 234, 334: Kontaktfläche
- 135, 235, 335: Aufnahme
- 236, 336: Gegenschulterelement
- 136: Negativelement
- 227, 327: Übergangsabschnitt
- 228, 328: Kopfteil
- 229, 329: Eingriffselement
- 240, 340: Stirnseite
- 341: Verzahnung
- 342: Zahn
- 343: Zahnspitzen
- 344: flache Zahnflanke
- 345: steile Zahnflanke
- 15, 15': Halteelement
- 151, 151', 251, 351: Eingriffsmittel
- 152, 152': Innengewinde
- 153: Haltefläche
- 16: Zusatzhalteelement
- 161: Eingriffsmittel
- 27, 37: Stützfläche
- 28, 38: Ringbund
- 28a, 28b, 38b: Schulterelement
- 29, 39: Ringnut
- 50: Kavität
- 51: Klebstoff
- E: Endmontagezustand
- I: Einsetzrichtung
- L₁₁, L_{11'}: Länge des Basisabschnitts
- L₁₂, L_{12'}: Länge des Abutmenthalteabschnitts
- L₁₃, L_{13'}: Länge des Schaftabschnitts
- L_{14'}: Länge der Bolzenverlängerung
- L₁₁₁, L_{111'}: Länge des ersten Aussengewindes
- L₁₁₂, L_{112'}: Länge des Abutmenthalteabschnitts
- L₁₃₂: Länge des Innengewindes
- L₁₄₁: Länge des Verlängerungsgewindes
- M: Mittelachse
- S: Schraubrichtung
- R: radiale Richtung
- V, V': Vormontagezustand

## Patentansprüche

1. Implantatschraube (4) für ein Implantat, insbesondere für ein Dentalimplantat (100, 100', 200, 300),
mit einem keramischen Kopfteil (228, 328),
mit einem in einen Basiskörper (130, 230, 330) eines Dentalimplantats (100, 100', 200, 300) einschraubbaren nicht-keramischen Basisgewinde (111, 111', 111", 211, 311), und
einem Haltegewinde (321),
**dadurch gekennzeichnet, dass**
zwischen dem Kopfteil (228, 328) und dem Haltegewinde (321) eine Kavität (29, 39, 50) als Ringnut (29, 39) ausgeformt ist, welche mit einem Klebstoff (500) füllbar ist oder gefüllt ist, um den Kopfteil über eine Klebeverbindung mit dem Haltegewinde (321) zu verbinden.

2. Implantatschraube nach Anspruch 1, wobei der Kopfteil (228, 328) über einen Formschluss zur Übertragung eines um eine Mittelachse (M) der Implantatschraube (4) wirkenden Drehmoments mit dem Basisgewinde (111, 111', 111", 211, 311) verbunden ist.

3. Implantatschraube nach Anspruch 1 oder 2, wobei der Kopfteil (228, 328) mit einer Ausnehmung (1101, 2101, 3101) versehen ist, in der wenigstens abschnittsweise ein Verbinder (1, 1', 1", 2, 3) aufgenommen ist, an dem das Basisgewinde (111, 111', 111", 211, 311 ) ausgeformt ist.

4. Implantatschraube nach Anspruch 3, wobei in der Ausnehmung (1101, 2101, 3101) ein Gegenhaltegewinde (2102, 3102) zum Aufschrauben des Kopfteils (228, 328) auf den Verbinder (1, 1', 1", 2, 3) angeordnet ist.

5. Implantatschraube nach Anspruch 4, wobei auf einem ringförmigen Rand der Ausnehmung (1101, 2101, 3101) mit dem Gegenhaltegewinde (2102, 3102) eine mit dem Kopfteil (228, 328) verbundene Verzahnung (341) ausgeformt ist.

6. Implantatschraube nach Anspruch 5, wobei die Verzahnung (341) das Gegenhaltegewinde (2102, 3102) umkränzt.

7. Implantatschraube nach Anspruch 5 oder 6, wobei die Verzahnung (341) flache Zahnflanken (344) und/oder steile Zahnflanken (345) aufweist, wobei die flachen Zahnflanken (344) in eine Schraubrichtung (S) des Gegenhaltegewindes (2102, 3102) weisen bzw. die steilen Zahnflanken (345) entgegen der Schraubrichtung (S) weisen.

8. Implantatschraube nach einem der Ansprüche 3 bis 7, wobei eine mit dem Kopfteil (228, 328) verbundene Stirnseite (240, 340) in Richtung zum Basisgewinde (111, 111', 111", 211, 311) hin weist und/oder wenigstens abschnittsweise am Verbinder (1, 1', 1", 2, 3) anliegt.

9. Implantatschraube nach Anspruch 8, wobei die Stirnseite (240, 340) ringförmig ausgebildet ist.

10. Implantatschraube nach Anspruch 8 oder 9, mit wenigstens einem an der Stirnseite (240, 340) ausgeformten Zahn (342), an dem eine von der Stirnseite weg weisende Zahnspitze (343) ausgeformt ist.

11. Implantatschraube nach einem der Ansprüche 5 bis 7, wobei eine mit dem Kopfteil (228, 328) verbundene Stirnseite (240, 340), insbesondere eine ringförmig ausgebildete Stirnseite, in Richtung zum Basisgewinde (111, 111', 111", 211, 311) hin weist und/oder wenigstens abschnittsweise am Verbinder (1, 1', 1", 2, 3) anliegt; wobei an der Stirnseite wenigstens ein Zahn (342) ausgeformt ist, an dem eine von der Stirnseite weg weisende Zahnspitze (343) ausgeformt ist; und wobei der wenigstens eine Zahn zumindest abschnittsweise die Verzahnung (341) ausbildet.

12. Implantatschraube (4) nach einem der Ansprüche 3 bis 11, wobei der Verbinder (1, 1', 1", 2, 3) einen Halteabschnitt (12, 12', 12", 22, 32) aufweist, an dem ein Haltegewinde (121, 131, 131', 221, 321) zum Aufschrauben des Kopfteils (228, 328) auf den Verbinder (1, 1', 1", 2, 3) ausgeformt ist.

13. Implantatschraube (4) nach einem der Ansprüche 3 bis 12, wobei der Verbinder (1, 1', 1", 2, 3) einen Ringbund (28, 38) aufweist, der zumindest abschnittsweise in Richtung zum Kopfteil (228, 328) hin weist.

14. Implantatschraube (4) nach Anspruch 13, wobei wenigstens ein Eingriffsmittel (151, 151', 251, 351) zum Ansetzen eines Werkzeuges zum Einschrauben des Verbinders (1, 1', 1", 2, 2') am Ringbund (28,38) ausgeformt ist.

15. Implantatschraube (4) nach einem Ansprüche 1 bis 14, wobei wenigstens ein Eingriffselement (229, 329) zum Ansetzen eines Werkzeuges zum Einschrauben der Implantatschraube (4) am Kopfteil (228, 328) ausgeformt ist.

## Claims

1. An implant screw (4) for an implant, particularly for a dental implant (100, 100', 200, 300),
with a ceramic head part (228, 328),
with a non-ceramic base thread (111, 111', 111", 211, 311) that can be screwed into a base body (130, 230, 330) of a dental implant (100, 100', 200, 300), and
a holding thread (321),
**characterized in that** between the head part (228, 328) and the holding thread (321), a cavity (29, 39, 50) is formed as an annular groove (29, 39), which can be filled or is filled with an adhesive (500), in order to connect the head part to the holding thread (321) by an adhesive connection.

2. The implant screw according to claim 1, wherein the head part (228, 328) is connected to the base thread (111, 111', 111", 211, 311) via a form fit for transmitting a torque acting about a center axis (M) of the implant screw (4).

3. The implant screw according to claim 1 or 2, wherein the head part (228, 328) is provided with a recess (1101, 2101, 3101), in which, at least in sections, a connector (1, 1', 1", 2, 3) is incorporated, on which the base thread (111, 111', 111", 211, 311) is formed.

4. The implant screw according to claim 3, wherein in the recess (1101, 2101, 3101) a counterholding thread (2102, 3102) is arranged, for screwing the head part (228, 328) onto the connector (1, 1', 1", 2, 3).

5. The implant screw according to claim 4, wherein on an annular edge of the recess (1101, 2101, 3101) with the counterholding thread (2101, 3101), a toothing (341) connected to the head part (228, 328) is formed.

6. The implant screw according to claim 5, wherein the toothing (341) surrounds the counterholding thread (2102, 3102).

7. The implant screw according to claim 5 or 6, wherein the toothing (341) has flat tooth flanks (344) and/or steep tooth flanks (345), wherein the flat tooth flanks (344) point in a screwing direction (S) of the counterholding thread (2102, 3102), and the steep tooth flanks (345) point opposite to the screwing direction (S), respectively.

8. The implant screw according to one of claims 3 to 7, wherein an front face (240, 340) connected to the head part (228, 328) points in the direction of the base thread (111, 111', 111", 211 , 311) and/or at least in sections abuts the connector (1, 1' , 1", 2, 3).

9. The implant screw according to claim 8, wherein the front face (240, 340) is annularly formed.

10. The implant screw according to claim 8 or 9, with at least one tooth (342) formed on the front face (240, 340), on which tooth a tooth tip (343) is formed that points away from the front face.

11. The implant screw according to one of claims 5 to 7, wherein a front face (240, 340) connected to the head part (228, 328), in particular an annular front face, points in the direction of the base thread (1'11, 111', 111", 211, 311) and/or at least in sections abuts the connector (1, 1', 1", 2, 3); wherein at least one tooth (342) is formed at the front face, on which tooth a tooth tip (343) is formed that points away from the front face; and wherein the at least one tooth at least in sections forms the toothing (341).

12. The implant screw (4) according to one of claims 3 to 11, wherein the connector (1, 1', 1", 2, 3) has a holding section (12, 12', 12", 22, 32), on which a holding thread (121, 131, 131', 221, 321) is formed, for screwing the head part (228, 328) onto the connector (1, 1', 1", 2, 3).

13. The implant screw (4) according to one of claims 3 to 12, wherein the connector (1, 1', 1", 2, 3) has a ring collar (28, 38) that, at least in sections, points in the direction of the head part (228, 328).

14. The implant screw (4) according to claim 13, wherein at least one engagement means (151, 151', 251, 351) for the application of a tool for screwing in the connector (1, 1', 1", 2, 2') is formed at the ring collar (28, 38).

15. The Implant screw (4) according to any one of claims 1 to 14, wherein at least one engagement element (229, 329) for the application of a tool for screwing in the implant screw (4) ) is formed at the head part (228, 328).

## Revendications

1. Vis d'implant (4) pour un implant, en particulier pour un implant dentaire (100, 100', 200, 300),
avec une partie de tête (228, 328) en céramique,
avec un filetage de base (111, 111', 111", 211, 311) non céramique pouvant être vissé dans un corps de base (130, 230, 330) d'un implant dentaire (100, 100', 200, 300), et
un filetage de maintien (321),
**caractérisée en ce qu'**une cavité (29, 39, 50) est formée en tant que rainure annulaire (29, 39) entre la partie de tête (228, 328) et le filetage de maintien (321), laquelle cavité peut être remplie ou est remplie d'un adhésif (500) pour relier la partie de tête au filetage de maintien (321) par l'intermédiaire d'une liaison adhésive.

2. Vis d'implant selon la revendication 1, dans laquelle la partie de tête (228, 328) est reliée au filetage de base (111, 111', 111", 211, 311) par l'intermédiaire d'une liaison par complémentarité de forme pour la transmission d'un couple de rotation agissant autour d'un axe médian (M) de la vis d'implant (4).

3. Vis d'implant selon la revendication 1 ou 2, dans laquelle la partie de tête (228, 328) est pourvue d'un évidement (1101, 2101, 3101) dans lequel un connecteur (1, 1', 1 ", 2, 3), sur lequel le filetage de base (111, 111', 111", 211, 311) est formé, est reçu au moins dans certaines sections.

4. Vis d'implant selon la revendication 3, dans laquelle un contre-filetage de maintien (2102, 3102) est disposé dans l'évidement (1101, 2101, 3101) pour le vissage de la partie de tête (228, 328) sur le connecteur (1, 1', 1", 2, 3).

5. Vis d'implant selon la revendication 4, dans laquelle une denture (341) reliée à la partie de tête (228, 328) est formée sur un rebord en forme d'anneau de l'évidement (1101, 2101, 3101) comportant le contre-filetage de maintien (2102, 3102).

6. Vis d'implant selon la revendication 5, dans laquelle la denture (341) entoure le contre-filetage de maintien (2102, 3102).

7. Vis d'implant selon la revendication 5 ou 6, dans laquelle la denture (341) présente des flancs de dent plats (344) et/ou des flancs de dent raides (345), les flancs de dent plats (344) étant dirigés dans un sens de vissage (S) du contre-filetage de maintien (2102, 3102), respectivement les flancs de dent raides (345) étant dirigés contre le sens de vissage (S).

8. Vis d'implant selon l'une des revendications 3 à 7, dans laquelle une face frontale (240, 340) reliée à la partie de tête (228, 328) est dirigée en direction du filetage de base (111, 111', 111", 211, 311) et/ou repose, au moins dans certaines sections, sur le connecteur (1, 1', 1", 2, 3).

9. Vis d'implant selon la revendication 8, dans laquelle la face frontale (240, 340) est en forme d'anneau.

10. Vis d'implant selon la revendication 8 ou 9, comportant au moins une dent (342) formée sur la face frontale (240, 340) et sur laquelle dent est formée une pointe de dent (343) dirigée à l'opposé de la face frontale.

11. Vis d'implant selon l'une des revendications 5 à 7, dans laquelle une face frontale (240, 340) reliée à la partie de tête (228, 328), en particulier une face frontale en forme d'anneau, est dirigée en direction du filetage de base (111, 111', 111", 211, 311) et/ou repose, au moins dans certaines sections, sur le connecteur (1, 1', 1", 2, 3) ; dans laquelle au moins une dent (342) est formée sur la face frontale, sur laquelle dent étant formée une pointe de dent (343) dirigée à l'opposé de la face frontale ; et dans laquelle l'au moins une dent forme la denture (341) au moins dans certaines sections.

12. Vis d'implant (4) selon l'une des revendications 3 à 11, dans laquelle le connecteur (1, 1', 1", 2, 3) présente une section de maintien (12, 12', 12", 22, 32) sur laquelle est formé un filetage de maintien (121, 131, 131', 221, 321) permettant de visser la partie de tête (228, 328) sur le connecteur (1, 1', 1", 2, 3).

13. Vis d'implant (4) selon l'une des revendications 3 à 12, dans laquelle le connecteur (1, 1', 1", 2, 3) présente une collerette annulaire (28, 38) qui est dirigée, au moins dans certaines sections, en direction de la partie de tête (228, 328).

14. Vis d'implant (4) selon la revendication 13, dans laquelle au moins un moyen de mise en prise (151, 151`, 251, 351 ) est formé, lequel permet de fixer un outil pour le vissage du connecteur (1, 1', 1", 2, 2') sur la collerette annulaire (28, 38).

15. Vis d'implant (4) selon l'une des revendications 1 à 14, dans laquelle au moins un élément de mise en prise (229, 329) est formé, lequel permet de fixer un outil pour le vissage de la vis d'implant (4) sur la partie de tête (228, 328).
